(19) Europäisches Patentamt
European Patent Office
Office européen des brevets

(11) Veröffentlichungsnummer: **0 163 318**
**B1**

(12) # EUROPÄISCHE PATENTSCHRIFT

(45) Veröffentlichungstag der Patentschrift: **02.09.87**

(51) Int. Cl.⁴: **C 07 C 143/14**, C 07 C 145/00, C 07 C 139/12

(21) Anmeldenummer: **85106736.3**

(22) Anmeldetag: **31.05.85**

(54) **Neue 2-substituierte 3-Sulfopropyl-ammoniumbetaine und Verfahren zu ihrer Herstellung.**

(30) Priorität: **01.06.84 DD 263723**
**01.06.84 DD 263718**

(43) Veröffentlichungstag der Anmeldung:
**04.12.85 Patentblatt 85/49**

(45) Bekanntmachung des Hinweises auf die Patenterteilung:
**02.09.87 Patentblatt 87/36**

(84) Benannte Vertragsstaaten:
**AT BE CH DE FR GB IT LI NL SE**

(56) Entgegenhaltungen:
**WO-A-84/00958**
**DD-A-139 577**
**DD-A-2 007 396**
**DD-B-154 443**
**DE-A-1 418 746**
**DE-C-1 117 565**
**US-A-4 267 123**

(73) Patentinhaber: **Akademie der Wissenschaften der DDR, Otto- Nuschke- Strasse 22/23, DDR- 1086 Berlin (DD)**

(72) Erfinder: **Ballschuh, Detlef, Dr. Dipl.- Chem., Graudenzer Strasse 17, DDR- 1034 Berlin (DD)**
Erfinder: **Seibt, Horst, Dr. Dipl.- Chem., Eugen-Schönhaar- Strasse 15, DDR- 1055 Berlin (DD)**
Erfinder: **Rusche, Jochen, Dr. Dipl.- Chem., Hans-Loch- Strasse 263, DDR- 1136 Berlin (DD)**
Erfinder: **Ohme, Roland, Dr. Dipl.- Chem., Waldstrasse 6, DDR- 1180 Berlin (DD)**

(74) Vertreter: **Patentanwälte Beetz sen. - Beetz jun. Timpe - Siegfried - Schmitt- Fumian, Steinsdorfstrasse 10, D-8000 München 22 (DE)**

EP 0 163 318 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1987

**Beschreibung**

Die Erfindung betrifft neue 3-Sulfopropyl-ammoniumbetaine. die in 2-Stellung eine Sulfinatgruppe (Sulfobetainsulfinat) oder eine Sulfonatgruppe (Sulfobeteinsulfonat) und darüber hinaus gegebenenfalls eine Methylgruppe besitzen, sowie Verfahren zur Herstellung dieser Verbindungen.

Sulfobetainsulfinate sind als Stoffklasse neu. Verfahren zur Herstellung anderer Betainsulfinate sind ebenfalls nicht bekannt.

Dagegen wurden Verfehren zur Herstellung von enders strukturierten Sulfobetainsulfonaten bereits beschrieben. So können solche Verbindungen mit nichtvicinalen Sulfonsäuregruppen auf zwei Wegen erhalten werden, indem entweder Hydroxyethylaminoverbindungen mit zwei Molen Propansulton umgesetzt werden /J. Amer. Oil Chemists Soc. 55. 741 (1978)/ oder indem Triallyl- oder Tetreallylammoniumsalze im pH-Wert-Bereich 5 bis 8 gleichzeitig mit Salzen der schwefligen Säure und einem Oxydationsmittel, beispielsweise Luftsauerstoff, zur Reektion gebrecht werden (DD-WP 200 739),

Die Nachteile dieser bekennten Verfahren bestehen darin daß im ersten Fall das außerordentlich cancerogene Propansulton eingesetzt und unter großen Vorsichtsmaßnehmen gehandhabt werden muß, im zweiten Falle der Einsatz von Allylammoniumverbindungen mit mehr als zwei Allylsubstituenten erforderlich ist. Ein weiterer gemeinsamer Nachteil dieser Verfahren besteht darin, daß zwangsweise mit der $SO_3^-$-Gruppe auch ein weiterer Kohlenwasserstoffrest eingeführt werden muß.

Als Reaktionsprodukte von ungesättigten aliphatischen Verbindungen mit Hydrogensulfiten wurden bisher sehr unterschiedliche Strukturen beschrieben. Bei einfachen Olefinen erfolgt eine radikalische Difunktionalisierung, wenn unter dem Einfluß von organischen Peroxiden oder von Luft im pH-Wert-Bereich 4 bis 9 Hydrogensulfite zur Reaktion gebracht werden. In langen Reaktionszeiten von einer bis zu mehreren Stunden wurden in der Hitze Produkte mit endständiger Sulfonsäuregruppe und benachbarter Sulfinatgruppe als wahrscheinlicher, aber unbewiesener Struktur erhalten (DE-PS 11 17 565).

Unter ähnlichen Bedingungen wurden aus Allylammoniumsalzen nach sehr langen Reaktionszeiten Isosulfonate erhalten /J. Amer. Oil Chemists Soc. 53, 60 (1976)/.

Aus der US-PS 4 267 123 (Beispiele 1 und 5) ist bekannt, daß man bei sauerstoffinduzierter Hydrogensulfitaddition an Allylheteroverbindungen Propansulfonate ($-CH_2CH_2CH_2SO_3-$) neben Propylsulfiten ($-CH_2CH_2CH_3-O-SO_2^-$) erhält, wobei die Propylsulfite das Hauptprodukt der Reaktion sind. In methanolhaltigen Reaktionsmischungen beträgt das Verhältnis Propylsulfit : Propansulfonat 80 : 15 %, in wäßriger Reaktionslösung sogar nur 93 : 3 %.

Nach DD-PS 154 443 werden demgegenüber Hydrogensulfite quantitativ an Allylammoniumsalze unter Bildung einheitlicher 3-Sulfopropyl-ammoniumbetaine (Sulfobetaine) addiert, wenn die sauerstoffinduzierte Reaktion durch Übergangsmetallionen katalysiert wird.

Der vorliegenden Erfindung liegt die Aufgabe zugrunde, neue 3-Sulfopropyl-ammoniumbetaine mit wertvollen Eigenschaften zu schaffen und dabei die Einführung der Sulfonsäuregruppe und einer zusätzlichen hydrophilen Säurefunktion in Allylammoniumsalzen derart zu ermöglichen, daß bei der Funktionalisierung die zwangsweise Einführung von weiteren kohlenwasserstoffhaltigen Resten entfällt.

Diese Aufgabe wird anspruchsgemäß gelöst. Die neuen 2-substituierten 3-Sulfopropyl-ammoniumbetaine besitzen die Formel I.

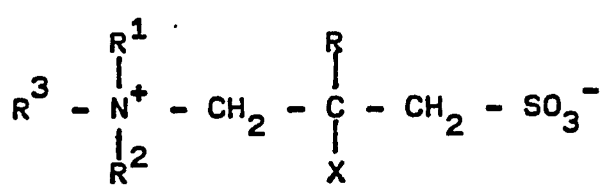

I

in der

R Wasserstoff oder eine Methylgruppe ist,

X $SO_2M$ oder $SO_3M$ darstellt wobei M Wasserstoff oder ein Alkalimetall, wie Natrium oder Kalium, oder auch $NH_4^+$ sein kann.

$R^1$ und $R^2$ unabhangig voneinander Wasserstoff, Alkylreste mit 1 bis 3 C-Atomen, Hydroxyalkylreste, Oxyalkylenreste mit bis zu 10 Ethylenoxideinheiten oder zum Ring geschlossene Substituenten sein können und

$R^3$ Wasserstoff oder ein Alkylrest mit 1 bis 22 C-Atomen. wobei in der Kette -NH-CO- oder -CO-NH- enthalten sein kann,

bedeutet.

Gegenstand der Erfindung sind ferner Verfahren zur Herstellung der Verbindungen der Formel I.

Die neuen Verbindungen werden erfindungsgemäß dadurch erhalten, indem Allylammoniumsalze oder Methallylammoniumsalze der allgemeinen Formel II,

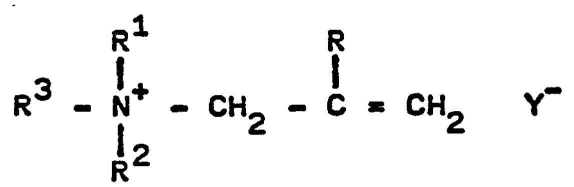

II

in der

R, $R^1$, $R^2$ und $R^3$ die obengenannten Bedeutungen besitzen und $Y^-$ ein Anion, vorzugsweise Chlorid oder Bromid, darstellt,

im pH-Wert-Bereich zwischen 2,0 und 4,0 mit der mindestens zweifachen molaren Menge eines Hydrogensulfits in Anwesenheit eines Peroxodisulfats gegebenenfalls in Kombination mit anderen Oxydationsmitteln in wäßriger Lösung umgesetzt werden.

Wird hierbei in Anwesenheit von katalytischen Mengen des Peroxodisulfats umgesetzt, entstehen Sulfobetainsulfinate.

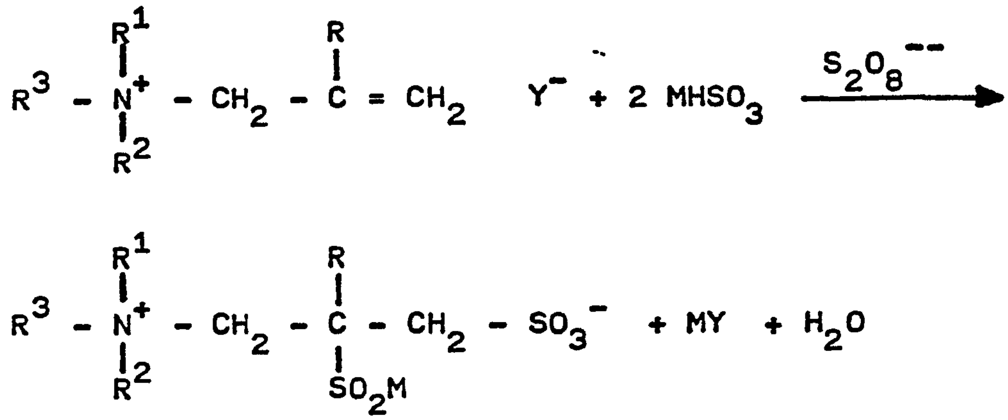


Diese Difunktionalisierung mit zwei sauerstoffhaltigen Schwefelfunktionen soll als Sulfosulfinierung bezeichnet werden.

Die durch diese Verfahrensweise ausgelöste Reaktion unterscheidet sich grundlegend von allen bisher an Allylammoniumsalzen durchgeführten Hydrogensulfitadditionen: Man erhält praktisch bei vollständigem Umsatz ausschließlich die Sulfobetainsulfinate durch Difunktionalisierung an der Doppelbindung; diese hohe Selektivität ist für eine nach einem Radikalmechanismus verlaufende Reaktion überraschend. Die erforderlichen Reaktionszeiten sind wesentlich kürzer als bei anderen Umsetzungen an der Allylammoniumgruppe. Die Reaktionen laufen in Minuten oder sogar Sekunden ab; sie gehören damit zu den schnellsten in Lösung verlaufenden Radikalreaktionen, welche die organische Chemie kennt. Die Initiierung der Sulfosulfinierung mit Peroxodisulfat war auch insofern überraschend, als andere Perverbindungen, wie Wasserstoffperoxid oder Alkaliperborate (siehe Beispiel 12), eine vergleichbare Reaktion nicht auslösen, sondern lediglich Sulfit zu Sulfat oxydieren. Auch nach den Angaben in der DE-OS 22 31 353 (Seite 4) gelten Kombinationen von Peroxiden mit Sulfiten als unbrauchbare Initiatorsysteme.

Im Unterschied zur Gewinnung der 3-Sulfopropyl-ammoniumbetaine (DD-WP 154 443) werden die Komponenten nicht simultan zugetropft, sondern Komponenten und Initiator werden auf einmal zusammengegeben. Da dies auch durch Vermischen am Anfang einer Verweilzeitstrecke geschehen kann, ist die Reaktion auch gut kontinuierlich durchführbar. Aufgrund der sehr hohen Raum-Zeit-Ausbeuten des erfindungsgemäßen Verfahrens können sowohl bei diskontinuierlicher Arbeitsweise als auch bei kontinuierlicher Reaktionsführung relativ kleine Reaktionsräume verwendet werden

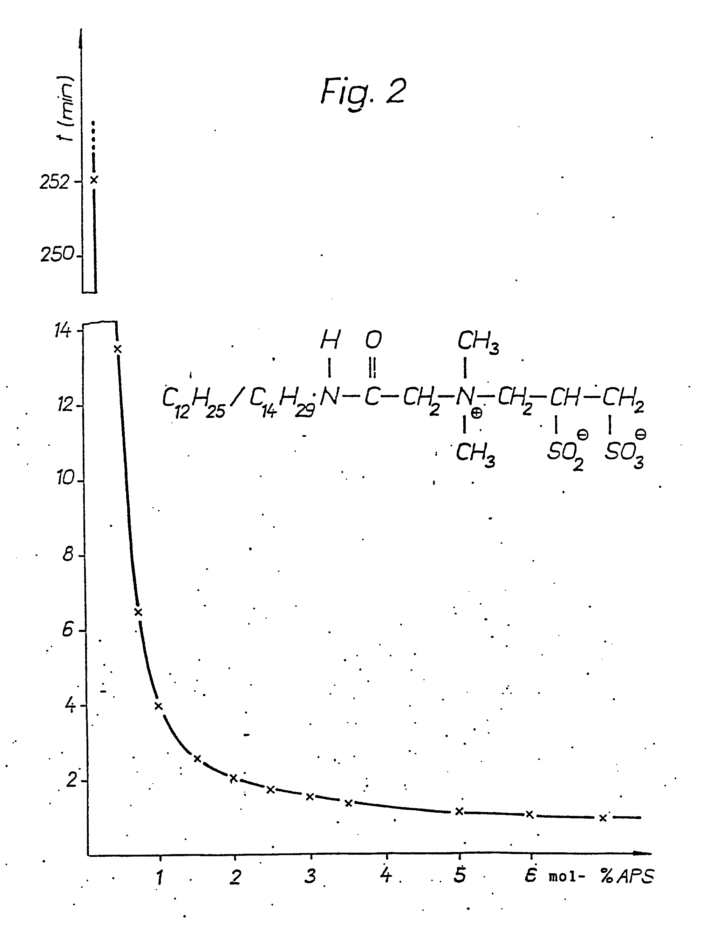

Die anzuwendende Menge an Initiator ist für kurzkettige Allylammoniumsalze (Fig. 1) und langkettige Vertreter mit Tensidcharakter (Fig. 2) etwas unterschiedlich. Unter Praxisbedingungen sollten Initiatormengen zwischen 1 und 3 Mol-% $S_2O_8^{--}$ verwendet werden. Während ein geringerer Peroxodisulfateinsatz zu unvollständigem Umsatz führen kann, wird bei zu großen Initiatormengen die Sulfosulfinierung so beschleunigt. daß die Reaktion unkontrollierbar wird (siehe Beispiel 9); beschleunigend wirken auch die Erhöhung der Konzentration des Allylammoniumsalzes in der Lösung und die Steigerung der Starttemperatur; umgekehrt kann durch Verdünnen oder Kühlen die Sulfosulfinierung gemäßigt werden (siehe Beispiel 10). Es ist auch möglich, mit wenig Peroxodisulfat zu initiieren und dann die Reaktion durch Einwirkung von Luft oder

Sauerstoff zu Ende zu führen (siehe Beispiel 9/Fig. 1; Beispiel 27/Fig. 2).

Wie sich gezeigt hat, verändert man beim Durchleiten von Luft durch Austragen von Schwefeldioxid sowohl das optimale Molverhältnis der Komponenten als auch den pH-Wert, wodurch die gleichzeitige Bildung von 3-Sulfopropyl-ammoniumbetain einsetzt (siehe Beispiel 11). Im Bereich oberhalb des pH-Wertes 4 werden dann merkliche Mengen dieses Nebenproduktes erhalten. Den starken Einfluß des pH-Wertes auf das Verhältnis von gebildetem Sulfobetainsulfinat zu Sulfobetain zeigen die Beispiele 3 bis 8 in der Tabelle 1 und die Beispiele 19 bis 21 in der Tabelle 2.

Zur Herstellung der Sulfobetainsulfinate arbeitet man vorzugsweise in wäßriger Lösung bei möglichst hohen Konzentrationen der Reaktionspartner, indem man Lösungen von Allylammoniumsalzen beziehungsweise von Methallylammoniumsalzen mit einer ca. 35 bis 41 %igen Lösung des Hydrogensulfits mischt und den Initiator als Lösung oder als Feststoff zusetzt. In anderen Fällen wird man feste Alkalimetabisulfite $M_2S_2O_5$ in den Lösungen substituierter Allylammoniumsalze zur Auflösung bringen oder feste substituierte Allylammoniumsalze in Alkalihydrogensulfitlösungen lösen, um möglichst konzentriert arbeiten zu können. Lösungsvermittler in Form niederer Alkohole können im Bedarfsfalle verwendet werden; sie beeinflussen die Richtung der Reaktion nicht. Kühlen der Reaktionsgemische ist in der Regel nicht erforderlich, da - beginnend bei Zimmertemperatur - die Temperaturen maximal um etwa 30 bis 40° C ansteigen. Der Anfangs-pH-Wert kann im Bedarfsfalle durch Zugabe von etwas Mineralsäure eingestellt werden, wenn z. B. technische Hydrogensulfitlösungen einen Anteil von Neutralsulfit enthalten (siehe Beispiele 9 und 10). Die erhaltenen Sulfobetainsulfinate können entweder isoliert oder als Zwischenprodukt ohne Isolierung weiter umgesetzt werden.

Ebenso kann in Anwesenheit von molaren Mengen des Peroxodisulfats die Reaktion durchgeführt werden, jedoch entstehen dann Sulfobetainsulfonate.

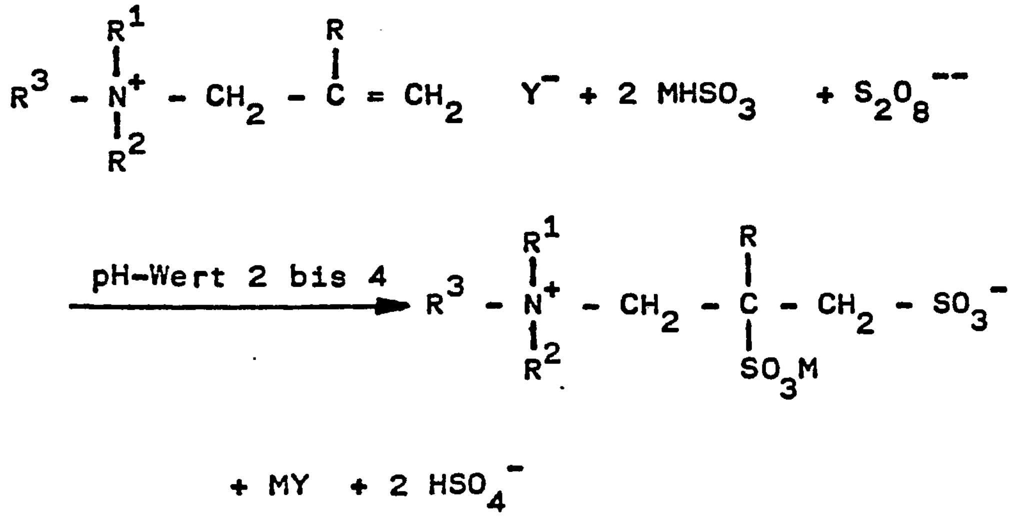


Die durch diese Verfahrensweise ausgelöste Reaktion unterscheidet sich ebenfalls in Verlauf und Endprodukt grundlegend von allen bisher an Allylverbindungen durchgeführten Hydrogensulfitadditionen. In der kurzen Reaktionszeit von wenigen Minuten erhält man bei vollständigem Umsatz ausschließlich 2,3-Disulfopropyl-ammoniumbetaine durch Difunktionalisierung der Doppelbindung; diese hohe Selektivität ist für eine nach einem Radikalmechanismus verlaufende Reaktion überraschend. Da in Abwesenheit von Allylverbindungen Peroxodisulfate mit Hydrogensulfiten in einer allgemein bekannten schnellen Redoxreaktion zu Sulfaten reagieren, war nicht zu erwarten, daß Allyldoppelbindungen einer quantitativen vicinalen Difunktionalisierung mit hoher Selektivität und Ausbeute unterliegen würden. Es ist ferner ein überraschender Befund, daß die Reaktion spezifisch an die Anwesenheit von Peroxodisulfaten gebunden ist. Andere Perverbindungen, beispielsweise Wasserstoffperoxid oder Alkaliperborate, lösen eine vergleichbare Reaktion nicht aus, sondern oxydieren lediglich Sulfit zu Sulfat.

Es ist jedoch möglich, in speziellen Fällen Peroxodisulfate und andere Perverbindungen oder sogar andere Oxydationsmittel gemeinsam einzusetzen. und zwar derart, daß dann weniger als die molare Menge Peroxodisulfat pro Mol Allylverbindung erforderlich ist. Hierzu eignen sich z. B. Wasserstoffperoxid, Chlor, Chlorat, Bromat u.a.m.

Vorzugsweise arbeitet man nach dem erfindungsgemäßen Verfahren so, daß man in wäßriger Lösung die Allylammoniumsalze mit der zweimolaren Menge Hydrogensulfit mischt, den pH-Wert auf 2 bis maximal 4 einstellt und unter Rühren das Peroxodisulfat in einmolarer Menge einträgt, wobei sich die fortschreitende Reaktion durch rasche Erwärmung der Reaktionsmischung zu erkennen gibt, die dabei bis zum Sieden kommen kann. Langkettig substituierte Allylammoniumsalze ergeben Sulfobetainsulfonate mit Tensideigenschaften. die bei der beschriebenen Verfahrensweise aus dem Reaktionsgemisch ausfallen und leicht isoliert sowie in reiner

Form gewonnen werden können. In anderen Fällen wird vor der Aufarbeitung die entstandene Schwefelsäure neutralisiert und das Sulfobetainsulfonat im Bedarfsfalle extraktiv vom anorganischen Salzanteil abgetrennt.

Eine kontinuierliche Durchführung des erfindungsgemäßen Verfahrens ist in einer geeigneten Vorrichtung dann möglich, wenn man die Komponenten im angegebenen Molverhältnis am Anfang einer Verweilzeitstrecke dosiert.

Es wurde gefunden, daß diese neuen Sulfobetainsulfinate als reaktive Zwischenprodukte und sowohl die Sulfobetainsulfinate als auch die Sulfobetainsulfonate als in einem breiten pH-Wert-Bereich wirksame Tenside verwendbar sind.

**Ausführungsbeispiele**

Die in den nachfolgenden Beispielen aufgefuhrten $^{13}C$-NMR-Spektren wurden in $D_2O$ gemessen, als externer Standard diente TMS. Die Zahlenangaben an den C-Atomsymbolen der Strukturformeln entsprechen den chemischen Verschiebungen in ppm.

**Beispiele 1 bis 8**

Allgemeine Arbeitsvorschrift zur Sulfosulfinierung von Dimethylallylaminhydrochlorid in Abhängigkeit vom Start-pH-Wert zu reinem Natrium-dimethyl-(2-sulfinato)-3-sulfopropyl-ammoniumbetain ($R^1$ = $R^2$ = $CH_3$; R = $R^3$ = H; X = $SO_2Na$ in der allgemelnen Formel I) und dessen Gemische mit Dimethyl-3-sulfopropyl-ammoniumbetain ($R^1$ = $R^2$ = $CH_3$; R = $R^3$ = H; X ist in der allgemeinen Formel I durch H ersetzt).

In einem mit Rührer, Thermometer und Glaselektrode versehenen Sulfierkolben werden nacheinander 185 g (1 mol) 65,65 %ige Dimethylallylaminhydrochloridlösung, hergestellt durch Lösen von frisch destilliertem Dimethylallylamin in konzentrierter Salzsäure, 516,5 g (2,02 mol) 40,7 %ige technische Natriumhydrogensulfitlösung mit einem Eisengehalt von 60 mg/l, sowie die entsprechende Menge 37 %ige Salzsäure oder 33 %ige Natronlauge und Wasser eingetragen, so daß die in Tabelle 1 aufgeführten Start-pH-Werte der Reaktionsmischungvom pH-Wert 2 (Beispiel 1) bis zum pH-Wert 6 (Beispiel 8) bei einer Arbeitsmenge von 1 kg gewährleistet sind.

In den Fällen, wo größere Mengen Natronlauge zur Einstellung des pH-Wertes erforderlich sind, erwärmt sich die Ausgangslösung und sollte deshalb, um gleiche Startbedingungen zu garantieren, vor der Umsetzung auf Raumtemperatur abgekühlt werden.

Zu der so vorbereiteten fahlgelben Startlösung fügt man unter Rühren auf einmal 4,1 g (2 Mol-%) feingepulvertes Natriumperoxodisulfat hinzu, wobei sich das Peroxodisulfat sofort auflöst, sich die reagierende Mischung erwärmt und - insbesondere bei Start-pH-Werten unter 5-blutrot färbt.

Folgende Obersicht zeigt den zeitlichen exothermen Verlauf der Sulfosulfinierung bei dem pH-Wert 4 (siehe Tabelle 1; Beispiel 4):

| Zeit (s) | 0 | 30 | 50 | 70 | 90 | 120 | 180 |
|---|---|---|---|---|---|---|---|
| Temp. (C) | 22,5 | 25,5 | 33 | 43 | 45,5 | 46 | 46 |

Nach Erreichen des Temperaturmaximums ist die Umsetzung beendet. Ein aliquoter Teil der erhaltenen Reaktionslösung wird im Vakuum zu einem salzartigen Rückstand eingeengt und seine Zusammensetzung durch den Vergleich der Intensitäten geeigneter Signale des $^{1}H$-NMR-Spektrums bestimmt.

Tabelle 1 zeigt die Abhängigkeit der Sulfobetainsulfinatausbeute, der Zeit bis zum Erreichen des Temperaturmaximums nach der Initiierung sowie der erreichten Temperaturdifferenz (Starttemperatur bis Temperaturmaximum) vom jeweils eingestellten pH-Wert.

Tab. 1: Sulfosulfinierung von Dimethylallylaminhydrochlorid unter Variation des pH-Wertes

| Beispiel | pH-Wert | Sulfinat-ausbeute (%) | Temperaturmaximum nach Initiierung (min) | Temperaturdifferenz (°C) |
|---|---|---|---|---|
| 1 | 2,0 | 100 | 2 | 20,5 |
| 2 | 2,5 | 100 | 2 | 23 |
| 3 | 3,0 | 96 | 2 | 23 |
| 4 | 4,0 | 91 | 2 | 23,5 |
| 5 | 4,5 | 83 | 2 | 22,5 |
| 6 | 5,0 | 75 | 2 | 13,5 |
| 7 | 5,5 | 65 | 2 | 9,5 |
| 8 | 6,0 | 50 | 2 | 6,5 |

So kann das Sulfobetainsulfinat in reiner Form nur ab einem Start-pH-Wert ≦ 2,5 erhalten werden. Bei höheren pH-Werten (Beispiele 3 bis 8) nimmt der Anteil an Dimethyl-3-sulfopropyl-ammoniumbetain stetig zu. Bei allen Beispielen ist das Temperaturmaximum zwar in 2 Minuten nach der Initiierung erreicht, jedoch bleibt insbesondere beiden Beispielen 6 bis 8 der Umsatz unvollständig, wie aus den gemessenen Temperaturdifferenzen hervorgeht. Entweder durch Erhöhung der Initiatorkonzentration oder durch zusätzliches Einrühren von Luftsauerstoff kann die Umsetzung vervollständigt werden; eine Ausbeuteerhöhung an Sulfobetainsulfinat konnte bei diesen pH-Werten jedoch nicht nachgewiesen werden.

**Beispiel 9**

Sulfosulfinierung von Dimethylallylhydrochlorid unter Variation der Initiatorkonzentration zum Natrium-dimethyl-(2-sulfinato)-3-sulfopropyl-ammoniumbetain ($R^1 = R^2 = CH_3$; $R = R^3 = H$, $X = SO_2Na$ in der allgemeinen Formel I)

In diesem Beispiel soll in einer Versuchsserie die Abhängigkeit der Dauer der exothermen Sulfosulfinierung einer Reaktionslösung vom pH-Wert 2,5 (1 mol Dimethylallylaminhydrochlorid und 2,1 mol Natriumhydrogensulfit/kg Reaktionslösung) von der eingesetzten Initiatormenge (Ammoniumperoxodisulfat = APS), die zwischen 0 Mol-% und 8 Mol-% variierte, dargestellt werden. Das Gesamtergebnis zeigt Fig. 1.

In einem Bereich von 0,5 Mol-% Peroxodisulfat und weniger wird die Reaktion in der Anfangsphase von der Perverbindung initiiert und kann dann durch Sauerstoffeinwirkung weitergeführt werden. Die ausschließliche Initiierung mit Luftsauerstoff erfordert bis zum vollständigen Umsatz viel längere Reaktionszeiten; zwar wird nach 50 Minuten das Temperaturmaximum erreicht, der Umsatz ist jedoch zu diesem Zeitpunkt noch nicht vollständig (vgl. Beispiel 12). Bei Einsatz höherer Peroxodisulfatkonzentrationen, beispielsweise 8 Mol-%, werden bis zum vollständigen Umsatz nur 20 Sekunden benötigt, noch höhere Initiatorkonzentrationen führen unmittelbar nach der Zugabe zum explosionsartigen Aufsieden der Mischung. Stellvertretend soll aus der Versuchsserie die Initiierung mit 2 Mol-% Ammoniumperoxodisulfat beschrieben werden:

In einem Sulfierkolben mit Rührer, Thermometer und Glaselektrode werden 85 g (1 mol) 65,65 %ige Dimethylallylaminhydrochloridlösung, 618,5 g (2,1 mol) 35,33 %ige technische Natriumhydrogensulfitlösung mit einem $Fe^{++}$ -Gehalt von 8 mg/l, 10 g 37 %ige Salzsäure und 171,5 g Wasser unter Rühren miteinander vereinigt. Der pH-Wert der Lösung beträgt 2,5. Dann wird eine Lösung von 4,56 g (2 Mol-%) Ammoniumperoxodisulfat in 10,44 g Wasser auf einmal zugefügt. Die Lösung färbt sich rot und nach 3 Minuten ist das Temperaturmaximum erreicht, was die Beendigung der Sulfosulfinierung anzeigt:

| Zeit (min) | 0 | 0,5 | 1 | 2 | 3 | 5 |
|---|---|---|---|---|---|---|
| Temp. (°C) | 20 | 31 | 40 | 42,5 | 43 | 43 |

**Beispiel 10**

Dieses Beispiel soll die Erhöhung der Reaktionsgeschwindigkeit der Sulfosulfinierung von Dimethylallylaminhydrochlorid zu Natrium-dimethyl-(2-sulfinato)-3-sulfopropyl-ammoniumbetain ($R^1 = R^2 = CH_3$; $R = R^3 = H$; $X = SO_2Na$ in der allgemeinen Formel I) bei höherer Einsatzkonzentration der Partner sowie die Verringerung der Reaktionsgeschwindigkeit bei Absenkung der Starttemperatur demonstrieren.

Zur Herstellung einer Lösung, deren pH-Wert 2 beträgt, werden miteinander gemischt:

185 g (1 mol) 65,65 %ige Dimethylallylaminhydrochloridlösung, 534,3 (2,1 mol) 40,9 %ige technische Natriumhydrogensulfitlösung und 21,4 g 37 %ige Salzsäure. Anschließend fügt man auf einmal 4,8 g (2 Mol-%) feingepulvertes Natriumperoxodisulfat unter Rühren hinzu. Augenblicklich färbt sich die reagierende Lösung rot, und innerhalb einer Minute erhöht sich die Temperatur von 22 auf 50°C, wonach der Umsatz quantitativ ist. Wiederholt man jedoch den Versuch bei einer Starttemperatur von 0°C, färbt sich die zunächst fahlgelbe Reaktionslösung erst nach 1,5 Minuten rot und erreicht nach 4 Minuten das Temperaturmaximum. Zeitlicher

Verlauf bei verschiedenen Starttemperaturen:

| Zeit (min) | 0 | 0,5 | 1 | 2 | 3 | 4 | 5 |
|---|---|---|---|---|---|---|---|
| Temp. (°C) | 0 | 5 | 10 | 22 | 29,5 | 30 | 30 |
| | 22 | 30 | 50 | 49,2 | 49 | - | - |

Von der Reaktionslösung werden im Vakuum 20 ml Wasser abdestilliert. um restliches Schwefeldioxid zu entfernen. Man neutralisiert mit Natronlauge und setzt einige Tropfen 30 %iges $H_2O_2$ zu. Nach Abfiltrieren vom Eisen(III)-hydroxid wird die farblose Reaktionslösung im Vakuum eingeengt. $^{13}C$-NMR-Spektrum:

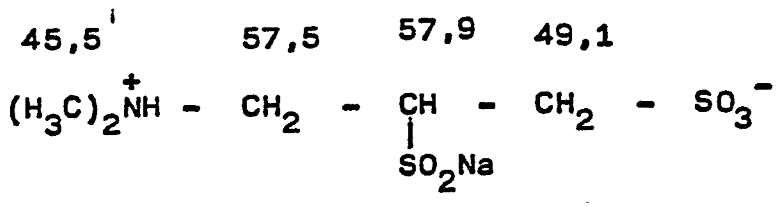


Zur Isolierung des freien Dimethyl-(2-sulfinsäure)-3-sulfo-propyl-ammoniumbetains wird das Natriumsalz mit der ausreichenden Menge konzentrierter Salzsäure durchgearbeitet. Dann filtriert man von anorganischen Salzen - vorwiegend Natriumchlorid - ab und dampft das Filtrat im Vakuum ein, wobei die Sulfinsäure als farblose Substanz kristallisiert. Eine Umkristallisation aus Wasser unter Zusatz von Ethanol ist möglich.

$^{13}C$-NMR-Spektrum:

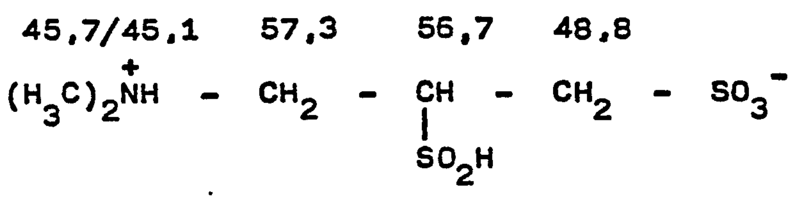


Gegenüber dem Natriumsalz sind die N-$CH_3$-Gruppen der Sulfinsäure nichtäquivalent.

Durch Neutralisation der Sulfinsäure mit beliebigen Basen können im Bedarfsfalle die jeweiligen Salze (Sulfobetainsulfinate bzw. Sulfinatsulfonate) formelrein gewonnen werden.

**Beispiel 11**

Dieses Beispiel und das folgende sollen die Initiierung der Sulfosulfinierung von Dimethylallylaminhydrochlorid mit weiteren Initiatoren, wie Sauerstoff, Wasserstoffperoxid und Natriumperborat demonstrieren, sowie deren Unterlegenheit gegenüber dem erfindungsgemäßen Verfahren veranschaulichen.

Sulfosulfinierung unter Einrühren von Sauerstoff:

Man stelle in Analogie zu Beispiel 10 eine Mischung mit dem pH-Wert 2 aus 1 mol Dimethylallylaminhydrochlorid, 2,1 mol Natriumhydrogensulfitlösung und Salzsäure her. Durch heftiges Einrühren von Luftsauerstoff in die Lösung, derart, daß darin ständig Luftbläschen fein verteilt werden, wird die Reaktion initiiert und bis zum vollständigen Umsatz weitergeführt. Der zeitliche Verlauf der exothermen Sulfosulfinierung ist in nachstehender Obersicht dargestellt:

| Zeit (min) | 0 | 30 | 60 | 75 | 85 |
|---|---|---|---|---|---|
| Temp. (°C) | 21,5 | 28 | 31 | 31,5 | 31 |

Nach 75 Minuten Reaktionszeit wird zwar das Temperaturmaximum der Umsetzung durchlaufen, jedoch zeigt das $^{1}H$-NMR-Spektrum einer Probe, die nach 85 Minuten entnommen wurde, noch Ausgangsmaterial an. Nach 150 Minuten ist der Umsatz jedoch quantitativ.

Das Reaktionsprodukt enthält das Sulfobetainsulfinat in einer Menge von 91 % neben 9 % Sulfobetain.

Bei der analogen Umsetzung bei einem pH-Wert von 2 sowie Initiierung mit Natriumperoxodisulfat wird das Sulfosulfinierungsprodukt in wesentlich geringerer Reaktionszeit quantitativ erhalten (vgl. Beispiele 1, 2 und

10).

## Beispiel 12

Sulfosulfinierung von Dimethylallylaminhydrochlorid mit Wasserstoffperoxid sowie Natriumperborat:
Man verfährt wie in Beispiel 10 beschrieben, fügt jedoch anstelle von Natriumperoxodisulfat 2 Mol-% 30 %iges Wasserstoffperoxid auf einmal zur Reaktionsmischung hinzu. Die Temperatur der Lösung steigt in 10 Sekunden um 2°C und bleibt dann konstant. Es erfolgt keine Umsetzung zum Zielprodukt.

Mit Natriumperborat als Initiator erhält man bei gleichem Verlauf ebenfalls nur Ausgangsmaterial zurück. Erst durch zusätzliches Hinzufügen von Peroxodisulfat zur Reaktionslösung gelingt die quantitative Umsetzung zum Sulfobetainsulfinat, wie bereits in Beispiel 10 beschrieben.

## Beispiel 13

Sulfosulfinierung von N.N-Dimethyl-2-methallylaminhydrochlorid
Man verfährt wie in Beispiel 10 beschrieben und setzt die vereinigten Lösungen von 56 g Gesamtmasse aus 3,7 g (30 mmol) N,N-Dimethyl-2-methallylammoniumhydrochlorid, 65 mmol Natriumhydrogensulfit, Salzsäure. Leitungswasser und 5 Mol-% Natriumperoxodisulfat bei einem pH-Wert von 2,1 miteinander um. Die Reaktionslösung erwärmt sich um maximal 6,5°C, nachdem die Umsetzung bei Raumtemperatur gestartet wird.

Nach erfolgter Umsetzung wird die Lösung mit Natronlauge auf den pH-Wert 11 eingestellt und $^{13}C$-NMR-spektroskopisch untersucht. Das Spektrum zeigt, daß es sich nicht um ein einheitliches Produkt handelt. sondern aus 1-Dimethylamino-2-sulfinato-3-sulfonato-2-methylpropan-dinatriumsalz und 1-Dimethylamino-2-methyl-3-sulfonatopropan-natriumsalz besteht.

$^{13}C$-NMR-Spektrum in ppm (alle Signale über 15 % der Intensität gegenüber dem Hauptsignal bei 45,6 ppm): 64,9; 60,8; 60,1; 56,6; 55,9; 49,4; 49,0; 45,6; 39,9; 28,5; 19,5; 16,5.

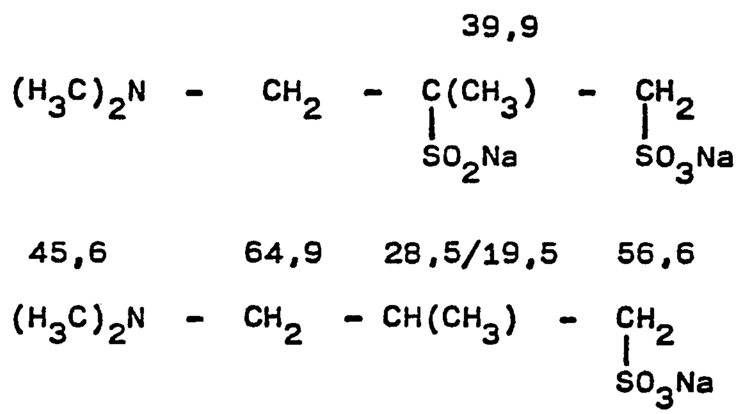


## Beispiel 14

Natrium-diethyl-(2-sulfinato)-3-sulfopropyl-ammoniumbetain ($R^1 = R^2 = C_2H_5$; $R = R^3 = H$; $X = SO_2Na$ in der allgemeinen Formel I) durch Sulfosulfinierung von Diethylallylaminhydrochlorid
Man verfährt nach Beispiel 10 und setzt die vereinigten Lösungen von 855 g Gesamtmasse aus 1 mol Diethylallylaminhydrochlorid, 2,1 mol Natriumhydrogensulfit, Salzsäure und 2 Mol-% Natriumperoxodisulfat bei einem pH-Wert von 2,5 miteinander um. Die exotherme Sulfosulfinierung nimmt folgenden zeitlichen Verlauf; nach etwa einer Minute färbt sich die Reaktionslösung blutrot:

| Zeit (s) | 0 | 30 | 60 | 90 | 110 | 150 |
|---|---|---|---|---|---|---|
| Temp. (C) | 19 | 20 | 33 | 45 | 45,5 | 45,3 |

$^{13}C$-NMR-Spektrum des Reaktionsproduktes:

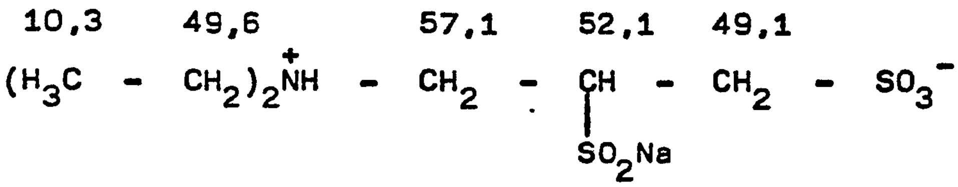


Das freie Diethyl-(sulfinsäure)-3-sulfopropyl-ammoniumbetain kann nach der im Beispiel 10 beschriebenen Verfahrensweise isoliert werden. Farblose, kristalline Substanz, aus Wasser unter Zusatz von Ethanol umkristallisierbar, mit dem $^{13}C$-NMR-Spektrum:

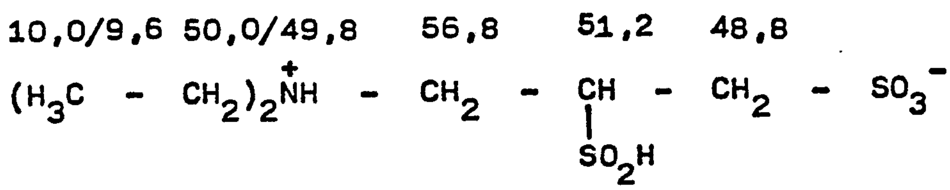


Gegenüber dem Natriumsalz sind die Ethylgruppen in der freien Sulfinsäure nicht äquivalent.

**Beispiel 15**

Natrium-(2-sulfinato)-3-sulfopropyl-ammoniumbetain ($R = R^1 = R^2 = R^3 = H$: $X = SO_2Na$ in der allgemeinen Formel I) durch Sulfosulfinierung von Allylaminhydrochlorid

Man verfährt wie im Beispiel 10 beschrieben und setzt die vereinigten Lösungen von 715 g Gesamtmasse aus 1 mol Allylaminhydrochlorid, 2,05 mol Natriumhydrogensulfit, Salzsäure und 2 Mol-% Natriumperoxodisulfat bei dem pH-Wert von 2,5 miteinander um. Der zeitliche Verlauf des Temperaturanstiegs der exothermen Sulfosulfinierung ist in nachstehender Übersicht dargestellt:

| Zeit (s) | 0 | 10 | 20 | 30 | 40 | 50 | 100 | 180 |
|---|---|---|---|---|---|---|---|---|
| Temp. (°C) | 24 | 30 | 48 | 54 | 55,5 | 55,7 | 55,7 | 55 |

$^{13}C$-NMR-Spektrum des Reaktionsproduktes:

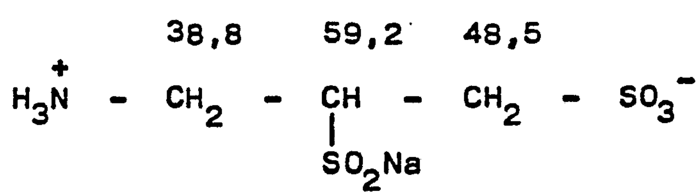


Das freie (2-Sulfinsäure)-3-sulfopropyl-ammoniumbetain kann nach der im Beispiel 10 beschriebenen Arbeitsweise als kristalline Substanz isoliert werden.

$^{13}C$-NMR-Spektrum:

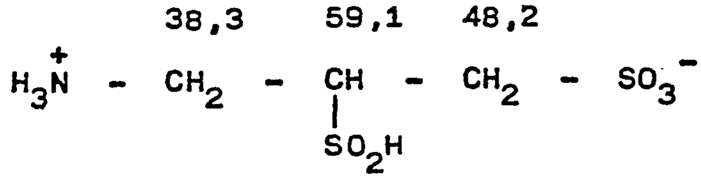

**Beispiele 16 bis 22**

Diese Beispiele beschreiben die Herstellung von reinem Natrium-trimethyl-(2-sulfinato)-3-sulfopropyl-ammoniumbetain (R = H; $R^1 = R^2 = R^3 = CH_3$; X = $SO_2Na$ in der allgemeinen Formel I) und dessen Gemische mit Trimethyl-3-sulfopropyl-ammoniumbetain ($R^1 = R^2 = R^3 = CH_3$: R = X = H in der allgemeinen Formel I) aus Trimethylallylammoniumchlorid und die Abhängigkeit der Sulfosulfinierung vom Start-pH-Wert.

Man verfährt wie in der allgemeinen Arbeitsvorschrift der Beispiele 1 bis 8 angegeben und setzt bei Start-pH-Werten, die in Tabelle 2 aufgeführt sind, 1 mol Trimethylallylammoniumchlorid, 2,02 mol Natriumhydrogensulfit und 2 Mol-% Natrium- oder Kaliumperoxodisulfat/kg Reaktionsgemisch miteinander um.

Stellvertretend für die Versuchsserie wird die Sulfosulfinierung bei dem pH-Wert 4 beschrieben:

341,6 g (1 mol) 39,7 %ige Trimethylallylammoniumchloridlosung, 516,5 g (2,02 mol) 40,7 %ige technlsche Natriumhydrogensulfitlösung (Eisengehalt 60 mg/l), 2 g 37 %ige Salzsäure und 134,5 g Leitungswasser werden mit 5,4 g (2 Mol-%) Kaliumperoxodisulfat zur Umsetzung gebracht.

Die reagierende Lösung erwärmt sich nach der Initiierung folgendermaßen:

| Zeit (min) | 0 | 1 | 2 | 3 | 3,5 | 4 | 6 |
|---|---|---|---|---|---|---|---|
| Temp. (C) | 24 | 27 | 36 | 46 | 47,5 | 48 | 48 |

Ein aliquoter Teil der erhaltenen Reaktionslösung wird im Vakuum zu einem salzartigen Rückstand eingeengt und die Zusammensetzung durch Vergleich der Intensitäten geeigneter Signale des $^1H$-NMR-Spektrums bestinmt.

Tabelle 2 zeigt die Abhängigkeit der Sulfobetainsulfinatausbeute, der Zeitdauer bis zum Erreichen des Temperaturmaximums des Ansatzes nach der Initiierung sowie der erreichten Temperaturdifferenz von der Starttemperatur bis zum Temperaturmaximum vom jeweils eingestellten pH-Wert.

Tab. 2: Sulfosulfinierung von Trimethylallylammoniumchlorid unter Variation des pH-Wertes

| Beispiel | pH-Wert | Sulfinatausbeute (%) | Temperaturmaximum nach Initiierung (min) | Temperatur-differenz (°C) |
|---|---|---|---|---|
| 16 | 1,75 | 100 | 3 | 18 |
| 17 | 2,0 | 100 | 3 | 21 |
| 18 | 2,5 | 95 | 3 | 23 |
| 19 | 2,8 | 88 | 3 | 23 |
| 20 | 3,4 | 84 | 3 | 23 |
| 21 | 4,0 | 51 | 4 | 24 |
| 22 | 5,0 | 42 | 8 | 17 |

So kann das Sulfobetainsulfinat nur bei einem Start-pH-Wert $\leq$ 2 rein erhalten werden.

Das nach Beispiel 17 gewonnene Umsetzungsprodukt zeigt folgendes $^{13}C$-NMR-Spektrum:

55,8    65,8    57,2    47,3

$$(H_3C)_3\overset{+}{N} - CH_2 - \underset{\underset{SO_2Na}{|}}{CH} - CH_2 - SO_3^-$$

Bei höheren pH-Werten (Beispiele 18 bis 22) nimmt der Anteil an Trimethyl-3-sulfopropyl-ammoniumbetain stetig zu. Bei allen Beispielen ist das Temperaturmaximum 3 bis 8 Minuten nach der Initiierung zwar erreicht, jedoch bleibt - insbesondere bei den Beispielen 16 und 22 - der Umsatz zunächst unvollständig, wie aus den gemessenen Temperaturdifferenzen zu schließen ist. Erst durch Erhöhung der Initiatorkonzentration oder durch zusätzliches Einrühren von Luftsauerstoff kann die Umsetzung vervollständigt werden; eine Steigerung der Ausbeute an Sulfobetainsulfinat konnte bei diesen pH-Werten nicht beobachtet werden.

**Beispiele 23 bis 27**

Natrium-alkyldimethyl-(2-sulfinato)-3-sulfopropyl-ammonium-betaine ($R^1$ = $R^2$ = $CH_3$; $R^3$ = Alkyl; R = H; X = $SO_2Na$ in der allgemeinen Formel I) durch Sulfosulfinierung von Alkyldimethylallylammoniumsalzen

$$Alkyl - \overset{+}{N}(CH_3)_2 - CH_2 - \underset{\underset{SO_2Na}{|}}{CH} - CH_2 - SO_3^-$$

Tab. 3: Natrium-alkyldimethyl-(2-sulfinato)-3-sulfopropyl-ammoniumbetaine

| Beispiel | $R^3$(Alkyl) | Schmelzpunkt (°C) |
|---|---|---|
| 23 | $C_4H_9$ | Zers. > 243 |
| 24 | $C_8H_{17}$ | Zers. > 232 |
| 25 | $C_{10}H_{21}$ | Zers. > 248 |
| 26 | $C_{12}H_{25}$ | Zers. > 244 |
| 27 | $C_{16}H_{33}$ | 147 bis 153 +) |

+) Na = H

Man verfährt nach einem der vorstehend beschriebenen Beispiele und setzt die vereinigten Lösung aus dem jeweiligen Alkyldimethylallylammoniumsalz, Ammonium- oder Alkalihydrogensulfit bei dem pH-Wert 2 mit Ammonium- oder Alkaliperoxodisulfat um. Dabei können auch die kristallinen Alkyldimethylallylammoniumsalze eingesetzt werden. Im Falle des Hexadecylammoniumsalzes muß die Hydrogensulfitlösung auf etwa 40° C erwärmt werden, damit sich das Salz löst.

Nach erfolgter Sulfosulfinierung kristallisieren insbesondere die längerkettigen Sulfinate in der sich abkühlenden Reaktionslösung aus.

Die Abtrennung der reinen Sulfobetainsulfinate von den anorganischen Salzen kann auch durch Extraktion der eingedampften Lösungen mit etwa 80 %igem wäßrigen Ethanol erfolgen.

Auch die Gewinnung der freien Sulfinsäurenkann nach den in den vorstehenden Beispielen beschriebenen Methoden erfolgen. Durch Neutralisation der Sulfobetainsulfin säuren mit beliebigen Basen können die jeweiligen Salze formelrein gewonnen werden.

**Beispiel 28**

Natrium-N-dodecyl/tetradecylaminocarbonylmethyl-N,N-dinethyl-(2-sulfinato)-3-sulfopropyl-ammoniumbetain ($R^1$ = $R^2$ = $CH_3$; $R^3$ = $CH_2$-CONH-$C_{12}H_{25}$/$C_{14}H_{29}$; R = H; X = $SO_2Na$ in der allgemeinen Formel I) durch Sulfosulfinierung von N-Dodecyl/tetradecylaminocarbonylmethyl-N,N-dimethylallylammoniumchlorid unter Variation der Initiatorkonzentration (vergl. Fig. 2)

$$C_{12}H_{25}/C_{14}H_{29}-NH-CO-CH_2-\overset{+}{N}(CH_3)_2-CH_2-\underset{\substack{|\\SO_2Na}}{CH}-CH_2-SO_3^-$$

Synthese des Ausgangsprodukts:

N-Methoxy-carbonyl-methyl-N,N-dimethylallylammoniumchlorid

850 g (10 mol) Allyldimethylamin werden in einem Reaktionsgefäß vorgelegt. Dazu tropft man 1085 g (10 mol) Chloressigsäuremethylester. Während des Zutropfens steigt die Temperatur langsam an und wird durch gelegentliches Kühlen zwischen 60 und 70°C gehalten. Das so erhaltene Reaktionsprodukt ist nach quantitativem Umsatz, der nach etwa 30 Minuten erreicht wird, klar durchsichtig und viskos.

N-Dodecyl/tetradecylaminocarbonylmethyl-N,N-dimethylallylammoniumchlorid

Zu dem vorstehend beschriebenen Methylester-ammoniumchlorid tropft man innerhalb von 30 Minuten 1990 g (10 mol) verflüssigtes Dodecyl/tetradecylamin-Gemlsch (Cocosamin, Komponentenverhältnis etwa 1 : 1) hinzu, und zwar derart, daß die Reaktionstemperatur 70 bis 80 °C nicht übersteigt. Man erhält ein hochviskoses Endprodukt mit dem pH-Wert 7.

Wie bereits in Beispiel 9 beschrieben, wurde in analoger Weise die Abhängigkeit der Dauer der exothermen Sulfosulfinierung von 1 mol des nach vorstehender Vorschrift hergestellten Allylammoniumchlorids mit 2,1 mol Natriumhydrogensulfit in 1,1 kg Reaktionsgemisch (pH-Wert 2,2) von der Initiatorkonzentration untersucht.

Das als Initiator eingesetzte Ammoniumperoxodisulfat (APS) wird zwischen 0 Mol-% und 8 Mol-% variiert. Die jeweilige Starttemperatur beträgt 20°C.

Das Gesamtergebnis zeigt Fig. 2. Ein Vergleich mit Fig. 1 (Beispiel 9) weist bei Initiatormengen ab 0,5 bis 8 Mol-% einen sehr ähnlichen Verlauf, nämlich steigende Reaktionsgeschwindigkeit, aus. Weniger als 0,5 Mol-% initiieren die Sulfosulfinierung zwar in der Anfangsphase, jedoch kann die Vervollständigung der Umsetzung erst durch zusätzliches Einrühren von Luftsauerstoff erreicht werden, während man mit Luftsauerstoff allein keine technisch brauchbare Umsatzgeschwindigkeit erreicht.

Den zeitlichen Verlauf der Sulfosulfinierung mit beispielsweise 2 Mol-% APS zeigt die folgende Obersicht:

| Zeit (s) | 0 | 30 | 60 | 90 | 120 | 125 | 300 |
|---|---|---|---|---|---|---|---|
| Temp. (°C) | 20 | 23,5 | 29 | 36 | 41 | 41,5 | 41,5 |

Die anfänglich fahlgelbe Suspension färbt sich kurz nach der Initiatorzugabe orange, wird homogen und sieht dann durch eingerührte Luftbläschen milchig weiß aus. Die abgekühlte Reaktionslösung stellt eine homogene, klar durchsichtige, sirupöse Lösung von fahlgelber Farbe dar.

Die Abtrennung des reinen Sulfobetainsulfinats vom Schmelzpunkt 192°C (Zers.) von den anorganischen Salzen kann durch Extraktion der eingedampften Lösung mit ca. 80 %igem wäßrigen Alkohol erfolgen.

**Beispiel 29**

Natrium-N-hexadecyl/octadecyl-aminocarbonylmethyl-N,N-dimethyl-(2-sulfinato)-3-sulfopropyl-ammoniumbetain ($R^1 = R^2 = CH_3$; $R^3 = CH_2$-CO-NH-$C_{16}H_{33}/C_{18}H_{37}$; R = H; X = $SO_2Na$ in der allgemeinen Formel I)

$$C_{16}H_{33}/C_{18}H_{37}-NHCO-CH_2\overset{+}{N}(CH_3)_2-CH_2-\underset{\substack{|\\SO_2Na}}{CH}-CH_2-SO_3^-$$

Das als Ausgangsprodukt benötigte N-Hexadecyl/octadecylaminocarbonylmethyl-N,N-dimethylallylammoniumchlorid (1 mol) wird nach Beispiel 28 aus N,N-Dimethyl-allylamin, Chloressigsäuremethylester sowie dem 1 : 1-Gemisch von Hexadecyl- bzw. Octadecylamin hergestellt und mit 2,1 mol Natriumhydrogensulfit in Gegenwart von 2,5 Mol-% Ammoniumperoxodisulfat in 1,6 kg Reaktionsgemisch vom pH-Wert 2,1 bei einer Starttemperatur von 40°C umgesetzt.

Aus der sich abkühlenden Reaktionslösung scheidet sich das Sulfobetainsulfinat praktisch vollständig aus. Schmelzpunkt: 128°C (Zers.) aus 90 %igem Ethanol.

**Beispiel 30**

Natrium-N-/di-(dodecyl/tetradecylaminocarbonyl)/-methyl-N,N-dimethyl-(2-sulfinato)-3-sulfopropyl-ammoniumbetain ($R^1 = R^2 = CH_3$: $R^3 = CH(CONH-C_{12}H_{25}/C_{14}H_{29})_2$; R = H; X = $SO_2Na$ in der allgemeinen Formel I)

$$(C_{12}H_{25}/C_{14}H_{29}-NHCO)_2CH-\overset{+}{N}(CH_3)_2-CH_2-\underset{SO_2Na}{\underset{|}{CH}}-CH_2-SO_3^-$$

Das als Ausgangsprodukt benötigte Allylammoniumsalz wird folgendermaßen hergestellt:

85 g (1 mol) Dimethylallylamin werden in 200 ml Ethanol gelöst. Zu dieser Lösung tropft man unter Rühren bei 20°C 239 g (1 mol) Brommalonsäurediethylester hinzu und erwärmt danach noch 4 Stunden auf 78°C. Zu dieser Lösung fügt man anschließend 398 g (2 mol) Dodecyl/tetradecylamin-Gemisch (Cocosamin, Komponentenverhältnis ca. 1 : 1) allmählich hinzu. Zur Vervollständigung der Umsetzung wird noch 6 Stunden auf 80°C erwärmt und danach die größte Menge des Lösungsmittels im Vakuum entfernt. Zum verbleibenden Allylammoniumbromid werden 2,1 mol Natriumhydrogensulfit, Wasser und konzentrierte Salzsäure gegeben, so daß 1,6 kg einer homogenen Ausgangslösung vom pH-Wert 2,3 resultieren. Nach Erwärmen dieser Mischung auf 40°C sowie Zugabe von 3 Mol-% Ammoniumperoxodisulfat erfolgt die Sulfosulfinierung wie in den vorhergehenden Beispielen beschrieben.

Beim Abkühlen beginnt die Sulfobetainsulfinsäure als gelbliches Produkt aus der Lösung zu kristallisieren.

Eine aus Ethanol umkristallisierte Probe zeigt einen Schmelzpunkt von 74 bis 76°C.

**Beispiel 31**

Natrium-N-octanoylamidoethyl-N,N-dimethyl-(2-sulfinato)-3-sulfopropyl-ammoniumbetain ($R^1 = R^2 = CH_3$; $R^3 = C_7H_{15}CONH-CH_2-CH_2$; R = H; X = $SO_2Na$ in der allgemeinen Formel I)

$$C_7H_{15}-CO-NH-CH_2-CH_2-\overset{+}{N}(CH_3)_2-CH_2-\underset{SO_2Na}{\underset{|}{CH}}-CH_2-SO_3^-$$

Das als Ausgangsprodukt benötigte Allylammoniumchlorid kann aus Octansäuremethylester, N,N-Dimethylethylendiamin und Allylchlorid hergestellt werden.

1 mol des Allylammoniumchlorids, 2,1 mol Natriumhydrogensulfit, Salzsäure zum Einstellen des pH-Wertes auf 2,2 und Wasser werden zu einer Lösung von 1,6 kg vereinigt, sowie mit 2 Mol-% Ammoniumperoxodisulfat versetzt. Die reagierende Mischung erwärmte sich innerhalb von 2,5 Minuten von 20 auf 33,5°C wonach die Umsetzung beendet war.

Nach Aufarbeitung und Umkristallisation aus 80 %igem wäßrigen Ethanol konnte das Sulfobetainsulfinat in nahezu quantitativer Ausbeute vom Schmelzpunkt Zers. 209 °C isoliert werden.

**Beispiel 32**

Natrium-N-pentadecafluoro-octanoylamidoethyl-N,N-dimethyl-(2-sulfinato)-3-sulfopropyl-ammoniumbetain ($R^1 = R^2 = CH_3$; $R^3 = C_7F_{15}CONH-CH_2CH_2$; R = H; X = $SO_2Na$ in der allgemeinen Formel I)

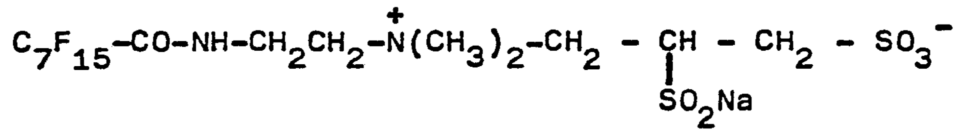

Das als Ausgangsprodukt benötigte Allylammoniumchlorid kann aus Pentadecafluoro-octansäurechlorid, N,N-Dimethylehtylendiamin und Allylchlorid hergestellt werden.

0,1 mol des Allylammoniumchlorids, 0,21 mol Natriumhydrogensulfit, Salzsäure zum Einstellen des pH-Wertes auf 2,2 und wasser werden zu einer Lösung von 160 g vereinigt, sowie mit 2 Mol-% Ammoniumperoxodisulfat versetzt. Die reagierende Mischung erwärmte sich innerhalb von 2 Minuten von 20 auf 35° C, wonach die Umsetzung beendet war.

Nach Aufarbeitung und Umkristallisation aus 50 %igem wäßrigen sauren Ethanol konnte die Sulfobetainsulfinsäure in nahezu quantitativer Ausbeute vom Schmelzpunkt 138 bis 140° C isoliert werden.

(Das Natriumsalz dieser Sulfobetainsulfinsäure ist stark hygroskopisch).

**Beispiel 33**

Natrium-dimethyl-2,3-disulfopropyl-ammoniumbetain ($R^1$ = $R^2$ = $CH_3$: R = $R^3$ = H; X = $SO_3Na$ in der allgemeinen Formel I) aus Dimethylallylaminhydrochlorid

In einem mit Rührer, Rückflußkühler, Tropftrichter und Thermometer ausgerüsteten Sulfierkolben wurden 310 g (1 mol) 39,2 %ige wäßrige Dimethylallylaminhydrochloridlösung, 533,6 g (2 mol) 39 %ige technische Natriumhydrogensulfitlösung mit einem Eisengehalt von 9 mg/mol Lösung sowie 30 g 37 %ige Salzsäure miteinander zu einer homogenen Lösung vermischt, deren pH-Wert 2,15 (Glaselektrode) war. Zur so vorbereiteten fahlgelben Startlösung fügte man eine 40 %ige wäßrige Natriumperoxodisulfatlösung, die aus 238,1 g (1 mol) Natriumperoxodisulfat ($Na_2S_2O_8$) und 357,15 g wasser bereitet wurde, zügig hinzu. Nach 2 Minuten waren etwa 60 % dieser Lösung zudosiert, und die rot gefärbte Lösung hatte sich von 21 auf 94°C erwärmt. Man setzte die Zugabe des Oxydationsmittels fort, wobei sich die Reaktionslösung zunehmend aufhellte und schließlich farblos wurde, nachdem etwa 90 % der Peroxodisulfatlosung hinzugefügt waren. Die überschüssige Reaktionswärme der inzwischen siedenden Lösung konnte leicht durch Siedekühlung abgeführt werden, so daß nach 4 Minuten die Zudosierung der Peroxodisulfatlösung beeendet war.

Die folgende Obersicht zeigt den zeitlichen Verlauf der exothermen Reaktion während der Zudosierungsphase des Oxydationsmittels:

| Zeit (min) | 0 | 0,5 | 1 | 2 | 3 | 4 | 5 |
|---|---|---|---|---|---|---|---|
| Temp. (°C) | 21 | 60 | 75 | 94 | 103 | 103 | 101 |

Ein zu diesem Zeitpunkt von der Lösung angefertigtes $^1H$-NMR-Spektrum bestätigte die quantitative und selektive Umwandlung des Allylammoniumsalzes in das Sulfobetainsulfonat. Nach Neutralisation der stark sauren Reaktionslösung mit 33 %iger Natronlauge flockte das durch die Verwendung von technischer Hydrogensulfitlösung darin enthaltene Eisensalz als Eisen-III-hydroxid aus und konnte zusammen mit dem größten Teil des auskristallisierten Natriumsulfats abfiltriert werden.

Das farblose Filtrat zeigte folgendes $^{13}C$-NMR-Spektrum: (die $N-CH_3$-Gruppen sind nicht äquivalent)

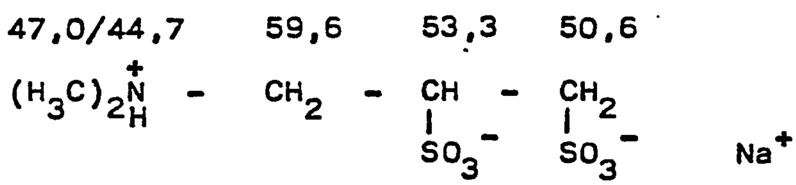


Soll das Sulfobetainsulfonat vollständig von seinen anorganischen Begleitsalzen abgetrennt und das freie Dimethyl-(2-sulfonsäure)-3-sulfopropyl-ammoniumbetain isoliert werden, kann man wie folgt verfahren: Nach Einengen der oben gewonnenen Reaktionslösung zur Trockne versetzt man den erhaltenen Rückstand mit der ausreichenden Menge konzentrierter Salzsäure und arbeitet ihn durch, filtriert von den ungelösten Natriumsalzen ab und dampft die salzsaure Lösung der Sulfobetainsulfonsäure unter vermindertem Druck zur

Trockne ein. Bald darauf beginnt die Sulfonsäure als weiße Substanz zu kristallisieren. Die Sulfonsäure, die sich ab 120° C langsam zu zersetzen beginnt, kann leicht aus Wasser umkristallisiert werden.

Das $^{13}C$-NMR-Spektrum dieser Säure ist mit dem des entsprechenden Natriumsalzes identisch.

Durch Neutralisation der Sulfonsäure mit beliebigen Basen können im Bedarfsfalle die jeweiligen Salze (Sulfobetainsulfonate bzw. Disulfonate) formelrein gewonnen werden. Mit 2 Moläquivalenten Natronlauge ist beispielsweise Dinatrium-3-dimethylaminopropan-1,2-disulfonat mit folgendem, $^{13}C$-NMR-Spektrum erhältlich:

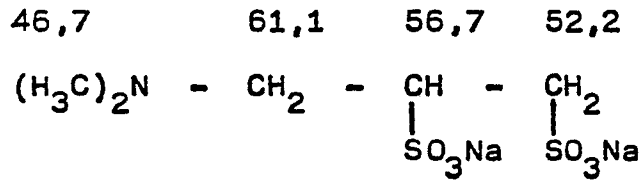

**Beispiel 34**

Natrium-N,N-dimethyl-2-methyl-2,3-disulfopropylammonium-betain

Man verfährt wie in Beispiel 33 beschrieben und setzt anstelle von Dimethylallylamin 7,4 g (30 mmol) 50 %ige wäßrige N,N-Dimethyl-2-methallylaminhydrochloridlösung, 65 mmol 39 %ige Natriumhydrogensulfitlösung und Salzsäure als homogene Lösung vom Start-pH-Wert 2,0 mit 65 mmol 40 %iger Natriumperoxodisulfatlösung miteinander um.

Nach erfolgter Umsetzung wird die Lösung mit 33 %iger Natronlauge auf pH 11 eingestellt, vom auskristallisierten Natriumsulfat abgetrennt und $^{13}C$-NMR-spektroskopisch untersucht. Das Spektrum zeigt ein Substanzgemisch aus 1-Dimethylamino-2,3-disulfonato-2-methylpropan-dinatriumsalz und 1-Dimethylamino-2-methyl-3-sulfonatopropan-natriumsalz an.

$^{13}C$-NMR-Spektrum in ppm (alle Signale über 20 % der Intensität gegenüber dem Hauptsignal bei 27,9 ppm): 75,5; 64,2; 63,8; 58,8; 58,6; 57,1; 56,2; 54,4; 49,0; 45,5; 45,2; 45,1; 45,0; 27,9; 21,5; 19,2;

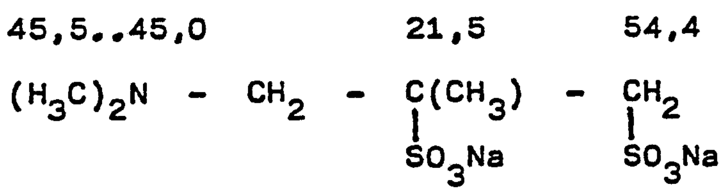

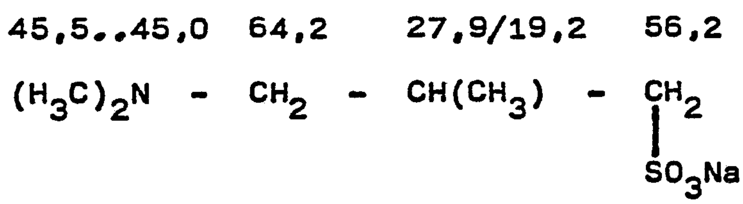

**Beispiel 35**

Natrium-trimethyl-2,3-disulfopropyl-ammoniumbetain

($R^1 = R^2 = R^3 = CH_3$; $R = H$; $X = SO_3Na$ in der allgemeinen Formel I) aus Trimethylallylammoniumchlorid

Man verfuhr wie in Beispiel 33 ausführlich beschrieben und vermischte miteinander 341,6 g (1 mol) 39,7 %ige Trimethylallylammoniumchloridlösung, 533,6 g (2 mol) 39 %ige Natriumhydrogensulfitlösung sowie 33 g 37 %ige Salzsäure zu einer homogenen Lösung, deren pH-Wert 2,0 war. Zu dieser Lösung tropfte man im Verlaufe von 5 Minuten 595,25 g 40 %ige Natriumperoxodisulfatlösung hinzu. Die folgende Übersicht soll den zeitlichen Verlauf der exothermen Reaktion während der Zudosierungsphase des Oxydationsmittels verdeutlichen:

| Zeit (min) | 0 | 0,5 | 1,5 | 4 | 5 |
|---|---|---|---|---|---|
| Temp. (°C) | 22 | 40 | 60 | 85 | 90 |

Die Umsetzung zum Sulfobetainsulfonat war zu diesem Zeitpunkt quantitativ und selektiv erfolgt, wie $^{1}H$-NMR-spektroskopisch ermittelt wurde.

$^{13}C$-NMR-Spektrum der neutralisierten Reaktionslösung:

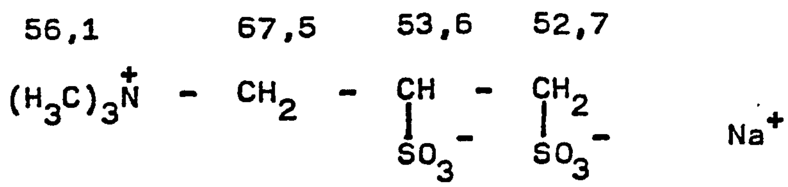


Wird jedoch der pH-Wert der homogenen Reaktionslösung zu Beginn auf Werte > 2 eingestellt, nimmt die Selektivität der ablaufenden Reaktion ab, wobei in zunehmendem Maße neben Trimethyl-2,3-disulfopropyl-ammoniumbetain auch Trimethyl-3-sulfopropyl-ammoniumbetain gebildet wird, welches schließlich zum Hauptprodukt der Umsetzung werden kann.

Diesen Sachverhalt soll das nachfolgende Beispiel demonstrieren:

**Beispiel 36**

Man verfuhr nach Beispiel 35 und vermischte 1 mol Trimethylallylammoniumchloridlösung mit 2 mol Natriumhydrogensulfitlösung miteinander. Zu der homogenen Lösung vom pH-Wert 4,0 wurde wie oben beschrieben 1 mol einer 40 %igen Natriumperoxodisulfatlösung hinzudosiert. Die quantitative Zusammensetzung der neutralisierten Reaktionslösung wurde durch Vergleich der Intensitäten geeigneter Signale $^{1}H$-NMR-spektroskopisch bestimmt und ergab, daß neben 59 % Trimethyl-2,3-disulfopropyl-ammoniumbetain 41 % Trimethyl-3-sulfopropyl-ammoniumbetain erhalten werden (vgl. DD-WP 154 443).

**Beispiel 37**

Dieses und das folgende Beispiel sollen die Eignung von Oxydationsmittel-Kombinationen veranschaulichen.

Man verfuhr nach den Beispielen 33 und 35 und stellte aus 1 mol Trimethylallylammoniumchloridlösung, 2 mol Natriumhydrogensulfitlösung und Salzsäure eine homogene Lösung vom pH-Wert 2,0 her und fügte zunächst in etwa 1,5 Minuten 15 Mol-% einer 50 %igen Ammoniumperoxodisulfatlösung und anschließend 85 Mol-% 30 %iges Wasserstoffperoxid in einer solchen Geschwindigkeit hinzu, daß die exotherme Reaktion durch Siedekühlung beherrscht werden konnte, wofür etwa 4 Minuten benötigt wurden.

$^{1}H$-NMR-spektroskopisch konnte nachgewiesen werden, daß das Allylammoniumsalz quantitativ zum Sulfobetainsulfonat umgewandelt worden war.

Die Wiederholung dieses Versuchs ausschließlich mit Wasserstoffperoxid als Oxydationsmittel führte neben unverändertem Ausgangsprodukt lediglich zu einer Oxydation des Sulfits zu Sulfat.

**Beispiel 38**

Man verfuhr nach Beispiel 37 und setzte anstelle von 85 Mol-% Wasserstoffperoxid als Oxydationsmittel Chlor ein.

$^{1}H$-NMR-spektroskopisch konnte nur das Sulfobetainsulfonat nachgewiesen werden. Hingegen konnte bei Wiederholung des Versuchs ausschließlich mit Chlor als Oxydationsmittel kein Sulfobetainsulfonat erhalten werden; es erfolgte lediglich die Oxydation des Sulfits zu Sulfat.

**Beispiel 39**

Natrium-diethyl 2,3-disulfopropyl-ammoniumbetain

($R^1 = R^2 = C_2H_5$; $R = R^3 = H$; $X = SO_3Na$ in der allgemeinen Formel I) aus Diethylallylaminhydrochlorid

Man stellte eine homogene Lösung aus 1 mol Diethylallylaminhydrochlorid, 1 mol Natriummetabisulfit ($Na_2S_2O_5$) und 37 %iger Salzsäure nach der Verfahrensweise vorstehender Beispiele her.

Bei Einstellung eines Start-pH-Wertes von 2,0 wurde das Sulfobetainsulfonat quantitativ erhalten.

$^{13}C$-NMR-Spektrum (die N-Ethylgruppen sind nicht äquivalent)

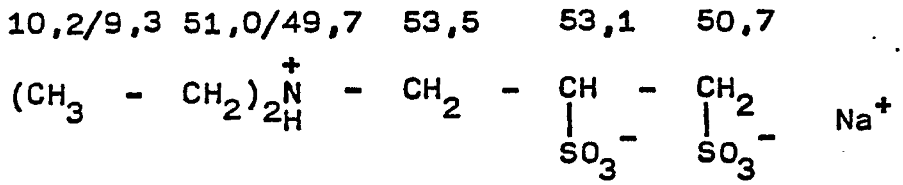

Die Isolierung des Diethyl-(2-sulfonsäure)-3-sulfopropyl-ammoniumbetains kann nach der in Beispiel 33 beschriebenen Arbeitsweise erfolgen. Man erhielt die Sulfonsäure zunächst als hochviskoses, farbloses Öl, das nach mehrtägigem Stehen, schneller jedoch nach Animpfen, zur Kristallisation kam. Das $^{13}C$-NMR-Spektrum ist praktisch mit dem des Natriumsalzes identisch.

Durch Neutralisation der Sulfobetainsulfonsäure oder des Sulfobetainsulfonats mit Natronlauge ist das Dinatrium-3-diethylaminopropan-1,2-disulfonat mit folgendem $^{13}C$-NMR-Spektrum erhältlich:

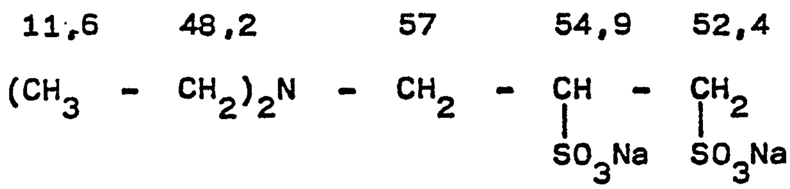

**Beispiel 40**

Natrium-triethyl-2,3-disulfopropyl-ammoniumbetain

($R^1 = R^2 = R^3 = C_2H_5$; R = H; X = $SO_3Na$ in der allgemeinen Formel I) aus Triethylallylammoniumbromid

Man stellte eine homogene Lösung vom pH-Wert 2,0 aus 1 mol Triethylallylammoniumbromid, 2 mol Natriumhydrogensulfit und Salzsäure her und verfuhr nach einem der vorstehenden Beispiele. Das Sulfobetainsulfonat wurde quantitativ erhalten und zeigte folgendes $^{13}C$-NMR-Spektrum:

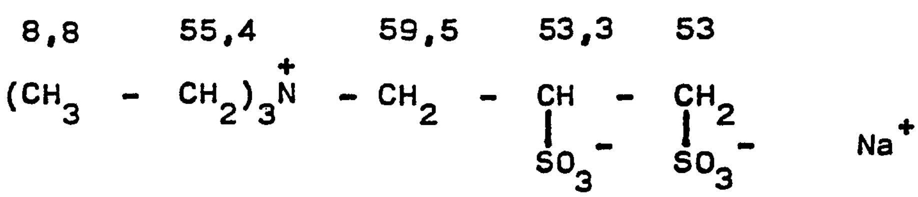

**Beispiel 41**

Natrium-2,3-disulfopropyl-ammoniumbetain

(R = $R^1 = R^2 = R^3$ = H; X = $SO_3Na$ in der allgemeinen Formel aus Allylaminhydrochlorid

Man stellte eine homogene Lösung vom pH-Wert 2,0 aus 1 mol Allylamin, 2 mol Natriumhydrogensulfit und Salzsäure her und verfuhr nach Beispiel 37.

Nach Neutralisation und Abfiltrieren des in Spuren vorliegenden unlöslichen Eisen-III-hydroxids begann aus der abgekühlten, farblosen Reaktionslösung unmittelbar das Sulfobetainsulfonat zu kristallisieren. Durch Zusatz von Ethanol kann man eine quantitive Auskristallisation erreichen. Aus Wasser läßt sich das Produkt sehr gut umkristallisieren.

$^{13}C$-NMR-Spektrum:

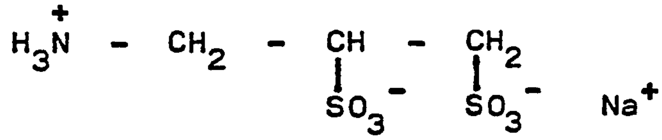


Das freie (2-Sulfonsäure)-3-sulfopropyl-ammoniumbetain kann nach der in Beispiel 33 beschriebenen Arbeitsweise isoliert werden. Es wird eine farblose kristalline Substanz erhalten, die ebenfalls leicht aus Wasser unter Zusatz von Ethanol umkristallisiert werden kann. Das $^{13}C$-NMR-Spektrum der freien Sulfonsäure ist praktisch mit dem des Sulfobetainsulfonats identisch.

Durch Neutralisation der Sulfobetainsulfonsäure oder des Sulfobetainsulfonats mit Natronlauge ist das Dinatrium-3-aminopropan-1,2-disulfonat mit folgendem $^{13}C$-NMR-Spektrum erhältlich:

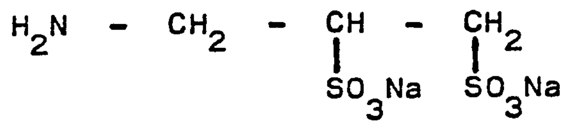


**Beispiele 42 bis 46**

Natrium-alkyl-dimethyl-2,3-disulfopropyl-ammoniumbetaine (R = H; $R^1$ = $R^2$ = $CH_3$; $R^3$ = Alkyl: X = $SO_3Na$ in der allgemeinen Formel I) aus Alkyl-dimethyl-allylammoniumsalzen

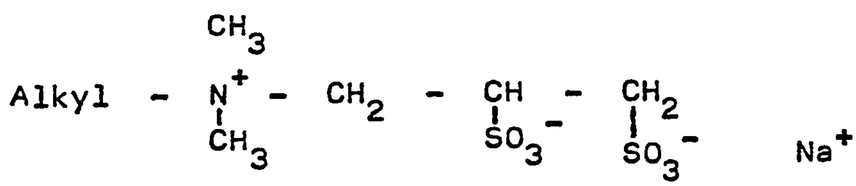

Man verfuhr nach einem der vorstehend beschriebenen Beispiele und stellte eine homogene Lösung von pH-Wert 2,0 aus 1 mol Alkyl-dimethyl-allylammoniumsalz, 2 mol eines Hydrogensulfits, Salzsäure und Wasser her. Im Falle der längerkettigen Alkyl-dimethyl-allylammoniumsalze (Alkyl > $C_{14}$) mußte die anfängliche Suspension auf etwa 40°C erwärmt werden, damit eine homogene Startlösung entstand.

Nach erfolgter Umsetzung mit 1 mol eines Peroxodisulfats oder einer Peroxodisulfat/Oxydationsmittel-Kombination fallen insbesondere die längerkettigen Reaktionsprodukte (Alkyl ≧ $C_{16}$) aus der sich abkühlenden Lösung aus. Je nachdem, ob die Reaktionsmischung vorher neutralisiert wurde, konnten entweder die freien Sulfobetainsulfonsäuren oder die entsprechenden Sulfobetainsulfonate abgetrennt werden.

Im Falle der kürzerkettigen Sulfobetainsulfonate trennte man diese von den anorganischen Begleitsalzen durch Extraktion des Rückstandes ihrer eingedampften Lösungen mit einem Ethanol/Wasser-Gemisch (1 : 1 bzw. 2 : 1) ab.

Tab. 4: Natrium-alkyl-dimethyl-2,3-disulfopropyl-ammoniumbetaine

| Beispiel | $R^3$ (n-Alkyl) | Zersetzungspunkt (°C) |
|---|---|---|
| 9 | $C_{10}H_{21}$ | > 196 |
| 10 | $C_{12}H_{25}$ | > 204 |
| 11 | $C_{14}H_{29}$ | > 226 |
| 12 | $C_{16}H_{33}/C_{18}H_{37}$ | > 143+) |
| 13 | $C_{18}H_{37}$ | > 165 |

+)Die freie Säure schmilzt unter Zersetzung bei 162 °C.

**Beispiel 47**

Natrium-aminocarbonylmethyl-dimethyl-2,3-disulfopropyl-ammoniumbetain
($R = H$; $R^1 = R^2 = CH_3$; $R^3 = CH_2\text{-}CO\text{-}NH_2$; $X = SO_3Na$ in der allgemeinen Formel I)

Man verfuhr nach Beispiel 37 und setzte die homogene Losung vom pH-Wert 2,0 aus 1 mol Aminocarbonylmethyl-dimethylallylammoniumchlorid, das aus Dimethylallylamin und Chloracetamid hergestellt wurde, 2 mol Natriumhydrogensulfit und Salzsäure mit Ammoniumperoxodisulfat/Wasserstoffperoxid unter Anwendung äußerer Kühlung so um, daß eine Reaktionstemperatur von 60°C nicht überschritten wurde. Nach erfolgter Umsetzung wurde sofort mit Natronlauge neutralisiert, um eine Hydrolyse der Säureamidfunktion zu vermeiden.

Will man jedoch analog Beispiel 33 nur mit Peroxodisulfat umsetzen, sollte nachdem etwa 10 Mol-% der Peroxodisulfatlösung zum Allylammoniumsalz zudosiert worden sind, gleichzeitig mit dem restlichen Peroxodisulfat (90 Mol-%) mindestens die zweimolare Menge Natronlauge unter Einhaltung einer Temperatur um 60°C hinzugefügt werden.

Das erhaltene Sulfobetain konnte durch Extraktion des Rückstandes der eingedampften Reaktionslösung mit einem Ethanol/Wasser-Gemisch (1 : 1) von den anorganischen Begleitsalzen abgetrennt werden.

Das in fast quantitativer Ausbeute erhaltene Sulfobetainsulfonat mit einem Zersetzungspunkt von 276°C zeigte das folgende $^{13}C$-NMR-Spektrum:

168,3 65,3 54,2/54,7 66,5 53,3 52,6

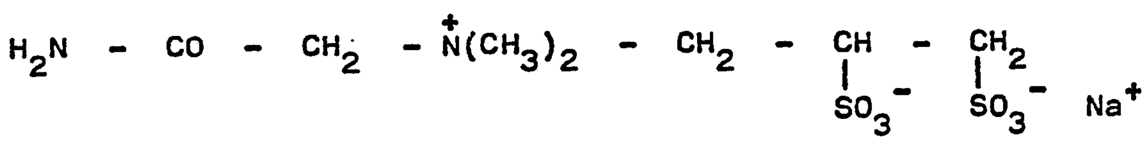

**Beispiel 48**

Natrium-dodecyl/tetradecylaminocarbonylmethyl-dimethyl-2,3-disulfopropyl-ammoniumbetain
($R = H$; $R^1 = R^2 = CH_3$; $R^3 = CH_2\text{-}CO\text{-}NH\text{-}C_{12}H_{25}/C_{14}H_{29}$; $X = SO_3Na$ in der allgemeinen Formel I)

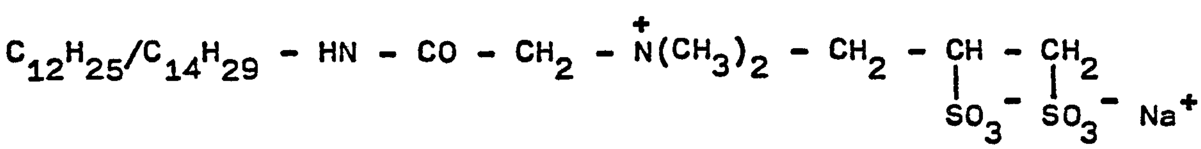

Man verfuhr nach Beispiel 47 und setzte Dodecyl/tetradecylaminocarbonylmethyl-dimethylallylamnoniumchlorid, das man aus Dimethylallylamin, Chloressigsäuremethylester und Dodecyl/tetradecylamin-Gemisch (Cocosamin, Komponentenverhältnis etwa 1 : 1) herstellte, quantitativ zum Sulfobetainsulfonat vom Schmelzpunkt 158°C (Zers.) um. Die Extraktion des Sulfobetainsulfonats erfolgte aus dem Rückstand der eingedampften Lösung durch wäßriges Ethanol (70 %ig).

**Beispiel 49**

Natrium-di(dodecyl/tetradecylaminocarbonyl)methyl-dimethyl-2,3-disulfopropyl-ammoniumbetain
($R = H$; $R^1 = R^2 = CH_3$; $R^3 = CH(CO\text{-}NH\text{-}C_{12}H_{25}/C_{14}H_{29})_2$; $X = SO_3Na$ in der allgemeinen Formel I)

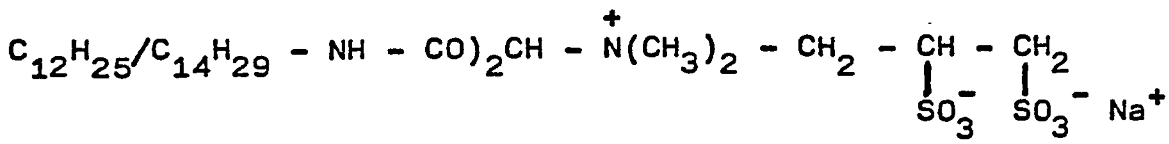

Man verfuhr nach Beispiel 47 und setzte Di(dodecyl/tetradecylaminocarbonyl)methyl-dimethyl-allylammoniumbromid, das man aus Dimethylallylamin, Brommalonsäurediethylester und Dodecyl/tetradecylamin-Gemisch (Cocosamin, Komponentenverhältnis etwa 1 : 1) herstellte, bei einer Reaktionstemperatur von 40° C quantitativ zum Sulfobetainsulfonat um. Beim Erkalten des Reaktionsgemisches fällt das so hergestellte Sulfobetainsulfonat aus; es wurde abgetrennt und aus Ethanol umkristallisiert. Es besitzt einen Schmelzpunkt von 155° C (Zers.).

**Beispiel 50**

Natrium-octanoylamidoethyl-dimethyl-2,3-disulfopropyl-ammoniumbetain
($R = H$; $R^1 = R^2 = CH_3$; $R^3 = CH_2\text{-}CH_2\text{-}NH\text{-}CO\text{-}C_7H_{15}$; $X = SO_3Na$ in der allgemeinen Formel I)

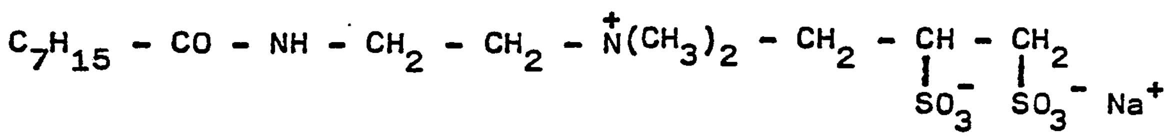

Man verfuhr nach Beispiel 47 und setzte Octanoylamidoethyldimethyl-allylammoniumchlorid, das man aus Octansäuremethylester, Dimethylethylendiamin und Allylchlorid herstellte, quantitativ zum entsprechenden Sulfobetainsulfonat vom Zersetzungspunkt > 186° C (umkristallisiert aus 70 %igem wäßrigen Ethanol) um.

**Beispiel 51**

Natriun-pentadecafluorooctanoylamidoethyl-dimethyl-2,3-disulfopropyl-ammoniumbetain
($R = H$; $R^1 = R^2 = CH_3$; $R^3 = CH_2\text{-}CH_2\text{-}NH\text{-}CO\text{-}C_7F_{15}$; $X = SO_3Na$ in der allgemeinen Formel I)

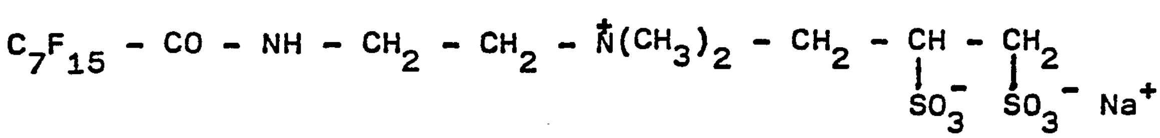

Man verfuhr nach Beispiel 47 und setzte Pentadecafluorooctanoylamidoethyl-dimethylallylammoniumchlorid, das man aus Pentadecafluorooctansäurechlorid, Dimethylethylendiamin und Allylchlorid herstellte, quantitativ zum kristallinen Sulfobetainsulfonat vom Schmelzpunkt 248° C (Zers.), umkristallisiert aus 70 %igem wäßrigen Ethanol, um.

**Patentansprüche**

1. 2-substituierte 3-Sulfopropyl-ammoniumbetaine der Formel I

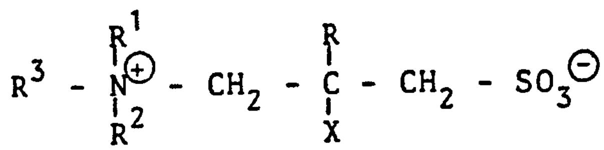

(I),

in der bedeuten:

R Wasserstoff oder Methyl,

X $SO_2M$ oder $SO_3M$, wobei M Wasserstoff oder ein Alkalimetall, wie Natrium oder Kalium, oder $NH_4^{\oplus}$ darstellt,

$R^1$ und $R^2$ unabhängig Wasserstoff, $C_{1-3}$-Alkyl, Hydroxyalkyl oder Oxyalkylenreste mit bis zu 10 Ethylenoxideinheiten oder zusammen einen zum Ring geschlossenen Substituenten und

$R^3$ Wasserstoff oder $C_{1-22}$-Alkyl, wobei in der Kette -NH-CO- oder -CO-NH- enthalten sein kann.

2. Verfahren zur Herstellung der 2-substituierten 3-Sulfopropyl-ammoniumbetaine der Formel I nach Anspruch 1, gekennzeichnet durch Umsetzung eines Allylammoniumsalzes oder Methallylammoniumsalzes der allgemeinen Formel II,

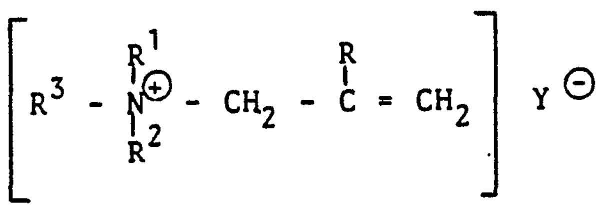

(II),

in der bedeuten:

R, $R^1$, $R^2$ und $R^3$ dasselbe wie in Anspruch 1 und

$Y^{\ominus}$ ein Anion, vorzugsweise Chlorid oder Bromid,

mit mindestens der zweifachen molaren Menge eines Hydrogensulfits in Anwesenheit eines Peroxodisulfats, gegebenenfalls in Kombination mit anderen Oxidationsmitteln, in wäßriger Lösung bei einem pH-Wert im Bereich von 2,0 bis 4,0.

3. Verfahren nach Anspruch 2, dadurch gekennzeichnet, daß das Peroxodisulfat in katalytischer Menge zugegeben wird.

4. Verfahren nach Anspruch 2, dadurch gekennzeichnet, daß das Peroxodisulfat allein in molarer Menge oder in Kombination mit anderen Oxidationsmitteln unter Verfügbarkeit von 2 Oxidationsäquivalenten, bezogen auf das eingesetzte Allylammoniumsalz oder Methallylammoniumsalz, zugegeben wird.

5. Verfahren nach Anspruch 2 oder 4, dadurch gekennzeichnet, daß in Kombination mit Peroxodisulfat als Oxidationsmittel Chlor oder Chlor abgebende Stoffe, Chlorate, Bromate, Wasserstoffperoxid oder Luft eingesetzt werden.

**Claims**

1. 2-substituted 3-sulfo propyl-ammonium betaines of formula I,

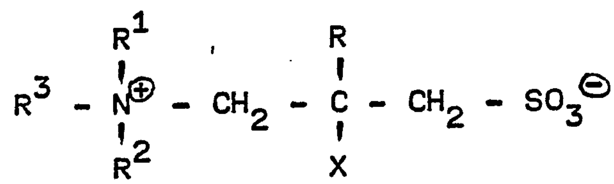

I

wherein

R is hydrogen or a methyl group

X represents $SO_2M$ or $SO_3M$, whereby M may be a hydrogen or an alkali metal, like sodium or potassium, or also $NH_4^{\oplus}$.

$R^1$ and $R^2$ indspendent from each other may be hydrogen, $C_{1-3}$-alkyl, hydroxyalkyl residues, oxyalkylene residues with up to 10 ethylene oxids unite or substitutes closed to a ring and

$R^3$ may be hydrogen or $C_{1-22}$-alkyl, whereby in the chain -NH-CO- or -CO-NH- may be contained.

2. Process for making the 2-substituted 3-sulfo propyl-ammonium betaines of formula I in accordance with claim 1, characterized in that allyl ammonium salts or methallyl ammonium salts of the general formula II,

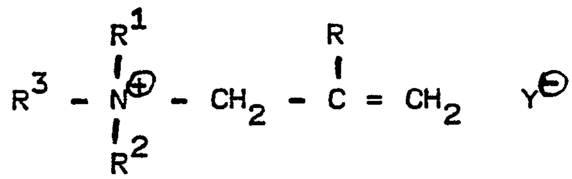

II

wherein
R, $R^1$, $R^2$ and $R^3$ have the aforementioned significance in accordance with claim 1 and $Y^\ominus$ represents an anion, preferably chloride or bromide, and are reacted with a pH-value range between 2,0 and 4,0 with at least the double amount of a hydrogen sulfite in the presence of a peroxo disulfate alone or in combination with other oxidation agents in an aqueous solution.

3. Process in accordance with claim 2, characterized in that the peroxo disulfate is added in a catalytic amount.

4. Process in accordance with claim 2, characterized in that the peroxo disulfate is added alone in a molar amount or in combination with other oxidation agents with the availability of 2 oxidation equivalents, calculated with respect to the allyl ammonium salt or methallyl ammonium salt used.

5. Process in accordance with claim 2 and 4, characterized in that the oxidation agents used in combination with peroxo disulfate are chlor or chlor admitting substances, chlorate, bromate, hydrogen peroxide or air.

**Revendications**

1. 3-sulfopropyl-ammonium-bétaïnes substituées en position 2 et répondant à la formule I:

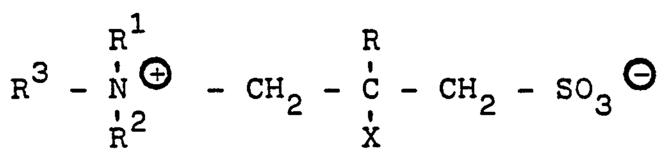

(I)

dans laquelle
R représente un atome d'hydrogène ou un groupe méthyle,
X représente $SO_2M$ ou $SO_3M$, M représentant un atome d'hydrogène ou un atome d'un métal alcalin tel que le sodium ou le potassium, ou encore $NH_4^\oplus$,
$R^1$ et $R^2$ représentent, indépendamment l'un de l'autre, des atomes d'hydrogène, des groupes alkyle en $C_1$-$C_3$, des groupes hydroxyalkyle ou des radicaux oxyalkylène comportant jusqu'à 10 motifs d'oxyde d'éthylène ou, ensemble, des substituants fermés en un noyau, et
$R^3$ représente un atome d'hydrogène ou un groupe alkyle en $C_1$-$C_{22}$, -NH-CO- ou -CO-NH- pouvant être contenu dans la chaîne.

2. Procédé de préparation de 3-sulfopropyl-ammonium-bétaïnes substituées en position 2 et répondant à la formule I selon la revendication 1, caractérisé en ce qu'on fait réagir un sel d'allylammonium ou un sel de méthallylammonium de formule générale (II):

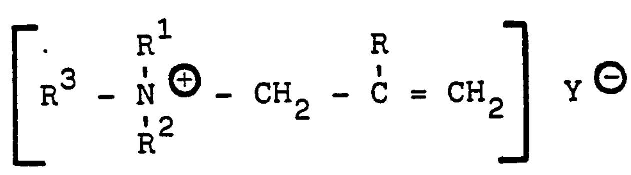

(II)

dans laquelle
R, $R^1$, $R^2$ et $R^3$ ont les mêmes significations que celles indiquées dans la revendication 1, et $Y^\ominus$ représente un anion, de préférence, un anion chlorure ou un anion bromure,
avec au moins la quantité molaire double d'un hydrogénosulfite en présence d'un peroxodisulfate, éventuellement en combinaison avec d'autres agents d'oxydation, en solution aqueuse, à un pH se situant dans le domaine de 2,0 à 4,0.

3. Procédé selon la revendication 2, caractérisé en ce qu'on ajoute le peroxodisulfate en une quantité catalytique.

4. Procédé selon la revendication 2, caractérisé en ce qu'on ajoute le peroxodisulfate seul en une quantité

molaire ou en combinaison avec d'autres agents d'oxydation avec disponibilité de 2 équivalents d'oxydation, rapporté au sel d'allylammonium ou au sel de méthallylammonium utilisé.

5. Procédé selon la revendication 2 ou 4, caractérisé en ce que, en combinaison avec le peroxodisulfate, comme agents d'oxydation, on utilise du chlore ou des substances dégageant du chlore, des chlorates, des bromates, du peroxyde d'hydrogène ou l'air.

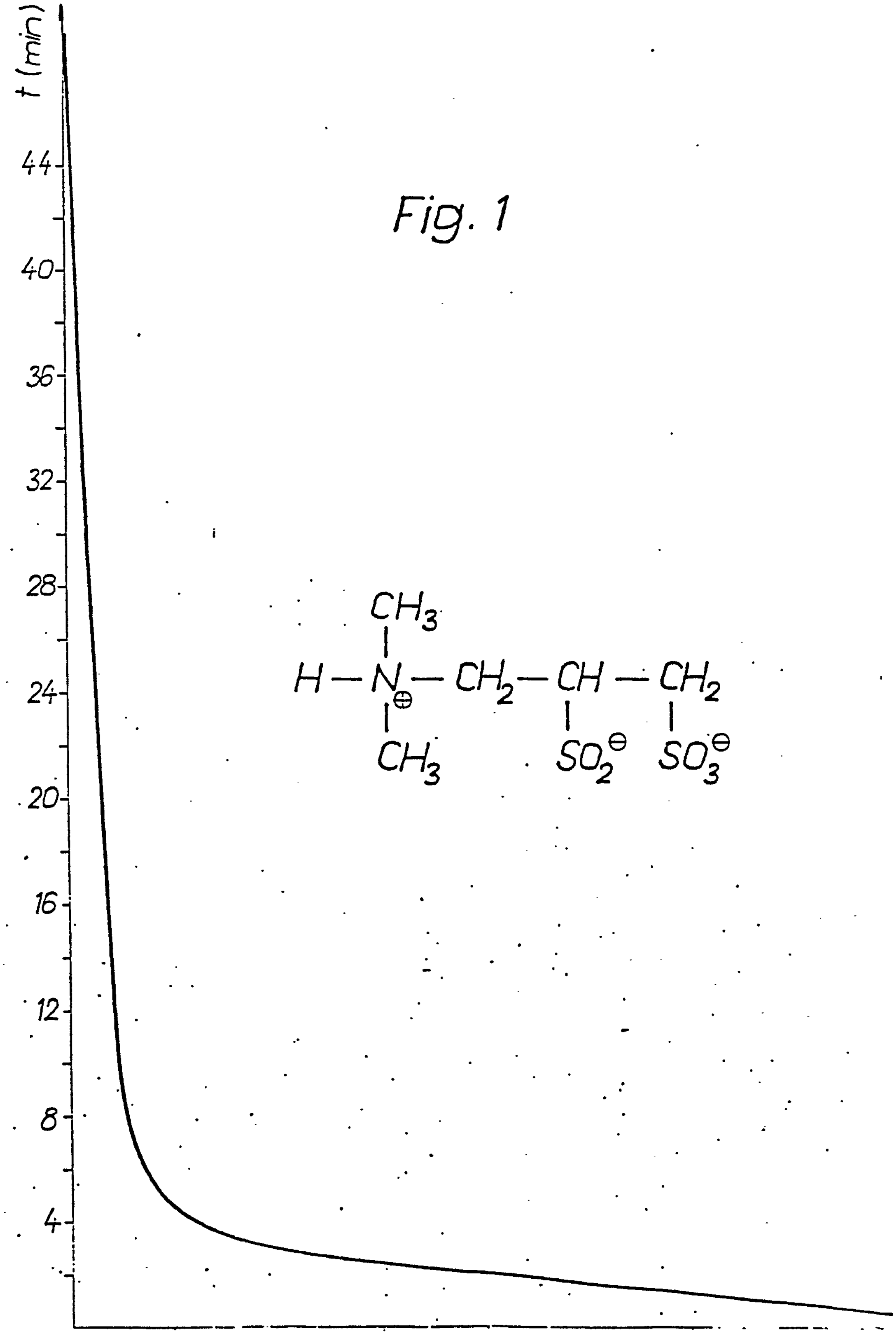


Fig. 1

Fig. 2